# EUROPÄISCHE PATENTSCHRIFT

(11) **EP 2 176 329 B1**
(45) Veröffentlichungstag und Bekanntmachung des Hinweises auf die Patenterteilung: **06.01.2016**
(21) Anmeldenummer: 08785117.6
(22) Anmeldetag: 25.07.2008
(51) Int. Cl.: C08K 3/08, C08K 3/32, C08K 3/00

(54) **ANTIMIKROBIELLES KUNSTSTOFFPRODUKT UND VERFAHREN ZU DESSEN HERSTELLUNG**
ANTIMICROBIAL PLASTICS PRODUCT AND PROCESS FOR PRODUCTION THEREOF
PRODUITS ANTIMICROBIENS EN MATIÈRE PLASTIQUE ET LEUR PROCÉDÉ DE RÉALISATION

(30) Priorität: 26.07.2007 DE 102007035063
(43) Veröffentlichungstag der Anmeldung: 21.04.2010
(73) Patentinhaber: Spiegelberg GmbH & Co. KG, 21079 Hamburg (DE)
(72) Erfinder: CICHOS, Christoph, 01468 Moritzburg (DE); CICHOS, Irmgard, 01468 Moritzburg (DE)
(74) Vertreter: UEXKÜLL & STOLBERG
(86) Internationale Anmeldenummer: PCT/EP2008/006166
(87) Internationale Veröffentlichungsnummer: WO 2009/013016

(56) Entgegenhaltungen:
- WO-A-02/13701
- WO-A-2004/024205

## Beschreibung

Die Erfindung betrifft antimikrobielle Kunststoffprodukte sowie Verfahren zu deren Herstellung. Bei Produkten handelt es sich insbesondere um medizinische Produkte wie beispielsweise Katheter.

Kunststoffoberflächen werden leicht mit Mikroorganismen und insbesondere mit Bakterien besiedelt. Die Mikroorganismen können sich auf Kunststoffoberflächen festsetzen und vermehren, so dass der Kunststoffgegenstand mit einem Film aus Mikroorganismen überzogen wird. Durch Kontakt mit einem Kunststoffgegenstand, dessen Oberfläche mit Mikroorganismen besiedelt ist, können Infektionen ausgelöst werden. Dies ist generell unerwünscht, aber besonders nachteilig bei der Verwendung von Kunststoffprodukten im medizinischen Bereich.

Katheter wie z.B. zentralvenöse Katheter, Wundkatheter, Ventrikelkatheter, Lumbalkatheter, Peritonealkatheter oder Harnröhrenkatheter werden im Allgemeinen aus Kunststoffen hergestellt. Andererseits ist bekannt, dass durch die Verwendung von mikrobiell verunreinigten Kathetern häufig Infektionen ausgelöst werden.

Um das Infektionsrisiko zu senken, werden Kunststoffe antimikrobiell ausgerüstet. Zu diesem Zweck werden antimikrobiell wirksame Metalle und insbesondere Silber verwendet.

In der WO 95/20878 wird ein Verfahren zur Herstellung von Kunststoffkörpern beschrieben, bei dem Polyurethanfolien mit metallischem Silber bedampft werden. Die mit einer Silberschicht überzogenen Folien werden dann zerkleinert. Das so erhaltene Material wird eingeschmolzen und zu Kunststoffkörpern, insbesondere für medizinische Anwendungen, geformt.

Die WO 01/09229 offenbart ein Verfahren zur Herstellung eines antimikrobiellen Kunststoffkörpers aus einem Vorprodukt. Bei diesem Verfahren wird mindestens ein Bestandteil des Vorprodukts mit einem Metallkolloid behandelt. Danach wird der Kunststoffkörper geformt. Das Metallkolloid ist vorzugsweise kolloidales Silber.

In der WO 2004/024205 wird ein Verfahren zur Herstellung eines antimikrobiellen Kunststoffproduktes aus einem Vorprodukt beschrieben. Bei diesem Verfahren wird das Vorprodukt zunächst mit einem antimikrobiellen Metallkolloid behandelt. Anschließend wird ein lösliches oder schwer lösliches Salz eines antimikrobiellen Metalls zugesetzt. Dann wird das Kunststoffprodukt geformt. Als verwendbare Metallsalze sind Silbersulphat und Silberphosphat genannt.

In der DE 10 2005 053 295 A1 wird im Ausführungsbeispiel beschrieben, dass Bariumsulfat mit einem Silberkolloid behandelt und nach Zusatz von Silberphosphat gereinigt und getrocknet wurde. Das erhaltene Pulver wurde mit Tecoflex 80 A compoundiert und zu Pellets verarbeitet. Aus den Pellets wurde durch Extrusion ein Schlauch hergestellt. Bei diesem Schlauch handelt es sich um ein Kunststoffprodukt, das einerseits mit metallischem Silber behandeltes Bariumsulfat und anderseits Silberphosphat enthält.

In Band 5 der 9. Auflage des Römpp Chemielexikon, Stuttgart 1992, heißt es auf Seite 4159 unter dem Stichwort "Silberphosphat":
"Ag₃PO₄, MG 418,63. Gelbes, geruchloses Plv., D. 6,37, Schmp. 849°, lösl. in verd. Säuren, entsteht als gelblicher Niederschlag aus wäss. Lsg. von Orthophosphaten und Silbernitrat; am Licht tritt allmählich Schwärzung ein"

In H. Remy, Lehrbuch der anorganischen Chemie, Akademische Verlagsgesellschaft Geest & Portig k.-G., Leipzig 1959, Band 2, Seite 481 wird über Silberphosphat ausgeführt:
Ag₃PO₄ fällt als gelber, in Wasser schwer-, in verdünnten Lösungen jedoch leicht löslicher Niederschlag aus Lösungen von Orthophosphaten auf Zusatz von Silbernitrat.... Am Licht erleidet die Verbindung allmählich Schwarzfärbung."

Gemäß dem durch die vorgenannten Textstellen aus Hand- und Lehrbüchern belegten allgemeinen Fachwissen wird Silberphosphat als nicht photostabil angesehen. Die Zersetzung unter Lichteinwirkung betrifft im übrigen nicht nur Silberphosphat sondern auch andere Silberverbindungen wie Silberchlorid, Silberbromid und Silberiodid und war Ausgangspunkt für die Entwicklung des fotografischen Prozesses.

Die EP 0 251 783 A2 offenbart antimikrobielle Zusammensetzungen, mit denen medizinische Gegenstände beschichtet oder imprägniert werden können. Die antimikrobiellen Zusammensetzungen enthalten eine antimikrobielle Silberverbindung wie Silberchlorid auf einem Träger aus einem physiologisch verträglichen, synthetischen Oxidmaterial in Teilchenform mit großer Oberfläche. In der EP 0 251 783 wird erläutert, dass Silberverbindungen in antimikrobiellen Zusammensetzungen den Nachteil haben, dass das in ionischer Form vorliegende Silber in Gegenwart von Licht oder anderer Strahlung instabil ist mit dem Ergebnis, dass es zu metallischem Silber reduziert wird. Die Reduktion zu metallischem Silber geht einher mit einer Farbänderung. Wenn ein Gegenstand, der mit einer antimikrobiellen Zusammensetzung beschichtet oder imprägniert ist, welche Silberverbindungen enthält, dem Licht ausgesetzt wird, kann er dunkler werden, was einen erheblichen ästhetischen Nachteil darstellt. Bei medizinischen Gegenständen, die für die Einführung in den Körper bestimmt sind, ist oft ein weißes oder im Wesentlichen weißes Aussehen bevorzugt. Aus ästhetischen Gründen ist es nicht akzeptabel, wenn sich solche Gegenstände während des Gebrauchs dunkel verfärben. Gemäß der Lehre der EP 0 251 783 A2 soll die Photostabilität von Silberchlorid dadurch verbessert werden, dass dieses auf ein physiologisch inertes, synthetisches Oxidträgermaterial in Teilchenform mit großer Oberfläche aufgezogen wird.

Nach der Lehre der EP 0 251 783 A2 erwies sich Silberchlorid auf Titanoxid als besonders geeignet. Weiterhin ist in der EP 0 251 783 A2 ausdrücklich angegeben, dass sich durch die Verwendung eines Trägers die Photoinstabilität von Silberphosphat nicht so unterdrücken lässt wie die von Silberchlorid.

Es wird angenommen, dass die antimikrobielle Wirksamkeit der bekannten silberhaltigen Kunststoffprodukte auf der Freisetzung von Silberkationen an der Oberfläche beruht. Soweit die bekannten antimikrobiellen Kunststoffprodukte metallisches Silber enthalten, ist dazu erforderlich, dass dieses zunächst durch Oxidation in Silberionen überführt wird. Dies hat den Nachteil, dass die Freisetzung von Silberionen von Umgebungsbedingungen abhängt. Die Oxidation des Silbers kann beispielsweise durch reduzierende Komponenten in dem Kunststoffprodukt behindert werden. Dafür sind bereits relativ schwache organische Reduktionsmittel wie z.B. Polyole ausreichend.

Soweit die bekannten Kunststoffprodukte ionische Silberverbindungen enthalten, liegt das Silber bereits in kationischer Form vor. Diese bekannten Kunststoffprodukte haben aber den Nachteil, dass sie sich verfärben, wenn sie dem Licht ausgesetzt werden. Wenn man versucht, gemäß der Lehre der EP 0 251 783 die Photostabilität durch Aufbringen der Silberverbindung auf ein teilchenförmiges Oxidträgermaterial mit großer Oberfläche zu verbessern, erkauft man sich die Verbesserung mit verschiedenen Nachteilen. Zum Einen kann das Trägermaterial selbst die Freisetzung der Silberionen verzögern. Zum Anderen muss die Zusammensetzung eines Kunststoffproduktes auf die jeweilige Anwendung abgestimmt werden. Insoweit stellt es eine große Einschränkung dar, wenn zur Verbesserung der Photostabilität die Anwesenheit eines teilchenförmigen synthetischen Oxidträgermaterials zwingend erforderlich ist. Schließlich lässt sich durch Einsatz eines Trägers die Photoinstabilität von Silberphosphat nicht so unterdrücken wie die von Silberchlorid, wie in der EP 0 251 783 A2 angegeben ist.

Aufgabe der Erfindung ist es, zur Überwindung der genannten Nachteile ein verbessertes Verfahren zur Herstellung eines antimikrobiell wirkenden Kunststoffproduktes vorzuschlagen. Zur Aufgabe gehört auch die Schaffung eines neuen Kunststoffproduktes, welches die genannten Nachteile nicht aufweist.

Gemäß einer ersten Ausführungsform der Erfindung wird die Aufgabe gelöst durch ein Verfahren zur Herstellung eines antimikrobiell wirkenden Kunststoffproduktes, umfassend
(a) Bereitstellung einer Lösung eines Silbersalzes in wäßrigem Ammoniak,
(b) Zugabe von Phosphorsäure unter Ausfällung von Silberorthophosphat als Feststoff, der in Suspension enthalten wird, bis der pH-Wert der Suspension zwischen 6,0 und 8,0 liegt,
(c) Abtrennen des Feststoffes,
(d1) Suspendieren des Feststoffes in deionisiertem Wasser,
(e1) Zugabe von wässrigem Ammoniak zu der Suspension und Erwärmung der Mischung auf eine Temperatur im Bereich von 40-90°C, wobei die Menge an Ammoniak so bemessen ist, dass bei der gewählten Temperatur im Bereich von 40-90°C 1 Gew.% bis 80 Gew.% der Silberionen in Lösung gehen,
(f1) Zugabe eines Reduktionsmittels bei der gewählten Temperatur im Bereich von 40-90°C in einer Menge, die ausreicht, die in Lösung befindlichen Silberionen zu metallischem Silber zu reduzieren, so dass ein teilreduziertes Silberorthophosphat als suspendierter Feststoff gebildet wird,
(g1) Abtrennen des Feststoffes,
(h1) wiederholtes Waschen des Feststoffes mit Portionen von deionisiertem Wasser, bis die spezifische Leitfähigkeit der letzten Probe Waschwasser nach Abtrennung von dem Feststoff einen Wert unter 20 µS/cm aufweist,
(n) Trocknen des Feststoffes,
(o) Einarbeiten des Feststoffes in ein Kunststoffvorprodukt, welches nicht mit einem Kolloidmetall behandelt worden ist oder ein solches enthält, und
(p) Formung des Kunststoffproduktes.

Gemäß einer zweiten Ausführungsform der Erfindung wird die Aufgabe gelöst durch ein Verfahren zur Herstellung eines antimikrobiell wirkenden Kunststoffproduktes, umfassend
(a) Bereitstellung einer Lösung eines Silbersalzes in wäßrigem Ammoniak,
(b) Zugabe von Phosphorsäure unter Ausfällung von Silberorthophosphat als Feststoff, der in Suspension enthalten wird, bis der pH-Wert der Suspension zwischen 6,0 und 8,0 liegt,
(c) Abtrennen des Feststoffes,
(d2) Suspendieren des Feststoffes in deionisiertem Wasser,
(e2) Zugabe eines Reduktionsmittels bei der gewählten Temperatur im Bereich von 40-90°C in einer Menge, die ausreicht, 1 Gew.% bis 65 Gew.% des in der Suspension des Feststoffs enthaltenen Silberorthophosphats zu metallischem Silber zu reduzieren, so dass ein teilreduziertes Silberorthophosphat als Feststoff gebildet wird,
(f2) Abtrennen des Feststoffes,
(g2) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist,
(n) Trocknen des Feststoffes,
(o) Einarbeiten des Feststoffes in ein Kunststoffvorprodukt, welches nicht mit einem kolloiden Metall behandelt worden ist oder ein solches enthält, und
(p) Formung des Kunststoffproduktes.

Gemäß einer dritten Ausführungsform der Erfindung wird die Aufgabe gelöst durch ein Verfahren zur Herstellung eines antimikrobiell wirkenden Kunststoffproduktes, umfassend
(a) Bereitstellung einer Lösung eines Silbersalzes in wässrigem Ammoniak,
(b) Zugabe von Phosphorsäure unter Ausfällung von Silberorthophosphat als Feststoff, der in Suspension erhalten wird, bis der pH-Wert der Suspension zwischen 6,0 und 8,0 liegt,
(c) Abtrennen des Feststoffes,
(d3) wiederholtes Waschen des Feststoffes mit Portionen von deionisiertem Wasser, bis die spezifische Leitfähigkeit des Waschwassers nach Abtrennung von dem Feststoff einen Wert unter 50 µS/cm aufweist,
(e3) Suspendieren des Feststoffes in deionisiertem Wasser, (f3) Zugabe von wässrigem Ammoniak zur Suspension und Erwärmung der Mischung auf eine Temperatur im Bereich von 40-90°C, wobei die Menge an Ammoniak so bemessen ist, dass bei der gewählten Temperatur im Bereich von 40-90°C 1 Gew.% bis 80 Gew.% der Silberionen in Lösung gehen,
(g3) Zugabe eines Reduktionsmittels bei der gewählten Temperatur im Bereich von 40-90°C in einer Menge, die ausreicht, die in Lösung befindlichen Silberionen zu metallischem Silber zu reduzieren, so dass ein teilreduziertes Silberorthophosphat als Feststoff gebildet wird,
(h3) Abtrennen des Feststoffes,
(i3) wiederholtes Waschen des Feststoffes mit Portionen von deionisiertem Wasser, bis die spezifische Leitfähigkeit der letzten Probe Waschwasser nach Abtrennung von dem Feststoff einen Wert unter 20 µS/cm aufweist,
(n) Trocknen des Feststoffes,
(o) Einarbeiten des Feststoffes in ein Kunststoffvorprodukt, welches nicht mit einem kolloiden Metall behandelt worden ist oder ein solches enthält, und
(p) Formung des Kunststoffproduktes.

Gemäß einer vierten Ausführungsform der Erfindung wird die Aufgabe gelöst durch ein Verfahren zur Herstellung eines antimikrobiell wirkenden Kunststoffproduktes, umfassend
(a) Bereitstellung einer Lösung eines Silbersalzes in wässrigem Ammoniak,
(b) Zugabe von Phosphorsäure unter Ausfällung von Silberorthophosphat als Feststoff, der in Suspension erhalten wird, bis der pH-Wert der Suspension zwischen 6,0 und 8,0 liegt,
(c) Abtrennen des Feststoffes,
(d4) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 50 µS/cm aufweist,
(e4) Suspendieren des Feststoffes in deionisiertem Wasser,
(f4) Zugabe eines Reduktionsmittels bei der gewählten Temperatur im Bereich von 40-90°C in einer Menge, die ausreicht, 1 Gew.% bis 65 Gew.% des in der Suspension des Feststoffs enthaltenen Silberorthophosphats zu metallischem Silber zu reduzieren, so dass ein teilreduziertes Silberorthophosphat als Feststoff gebildet wird,
(g4) Abtrennen des Feststoffes,
(h4) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist,
(n) Trocknen des Feststoffes,
(o) Einarbeiten des Feststoffes in ein Kunststoffvorprodukt, welches nicht mit einem kolloiden Metall behandelt worden ist oder ein solches enthält, und
(p) Formung des Kunststoffproduktes.

Gemäß einer fünften Ausführungsform der Erfindung wird die Aufgabe gelöst durch ein Verfahren zur Herstellung eines antimikrobiell wirkenden Kunststoffproduktes, umfassend
(a) Bereitstellung einer Lösung eines Silbersalzes in wäßriger Ammoniaklösung,
(b) Zugabe von Phosphorsäure unter Ausfällung von Silberorthophosphat als Feststoff, der in Suspension enthalten wird, bis der pH-Wert der Suspension zwischen 6,0 und 8,0 liegt,
(c) Abtrennen des Feststoffes,
(d5) mehrfaches Waschen des abgetrennten Feststoffes mit Portionen von deionisiertem Wasser, bis die spezifische Leitfähigkeit bei 25°C der letzten Portion Waschwasser nach Abtrennung von dem Feststoff einen Wert unter 50 µS/cm, vorzugsweise unter 20 µS/cm aufweist,
(e5) Trocknen des Feststoffs,
(f5) gegebenenfalls Zerkleinern des getrockneten Feststoffs,
(g5) Suspendieren des Feststoffs in deionisiertem Wasser und Erwärmen der Suspension auf eine Temperatur im Bereich von 70°C bis 100°C,
(h5) Auflösen von Citrat, vorzugsweise Trinatriumcitrat in deionisiertem Wasser und Erwärmen der wässrigen Lösung auf eine Temperatur im Bereich von 70°C bis 100°C, wobei die Menge an Citrat so bemessen ist, dass sie ausreicht, um zwischen 1 Gew.% und 65 Gew.% des in der Suspension des zerkleinerten Feststoffs enthaltenen Silberorthophosphats zu metallischem Silber zu reduzieren,
(i5) Zugabe der wässrigen Citratlösung in einer Portion zu der Suspension und Rühren der Suspension bei einer Temperatur im Bereich von 70°C bis 100°C unter Bildung eines teilreduzierten Silberorthophosphats als Feststoff, wobei die Temperatur durch Wärmezufuhr in dem genannten Bereich gehalten wird,
(k5) Beendigung der Wärmezufuhr und Weiterrühren der Suspension, bis sich diese auf Raumtemperatur abgekühlt hat,
(15) Abtrennen des Feststoffs,
(m5) wiederholtes Waschen des Feststoffs mit Portionen von deionisiertem Wasser, bis die spezifische Leitfähigkeit bei 25°C der letzten Portion Waschwasser nach Abtrennung von dem Feststoff einen Wert unter 20 µS/cm aufweist,
(n) Trocknen des Feststoffs,
(o) Einarbeiten des Feststoffes in ein Kunststoffvorprodukt, welches nicht mit einem kolloiden Metall behandelt worden ist oder ein solches enthält, und
(p) Formung des Kunststoffproduktes.

Das Kunststoffprodukt gemäß der ersten, zweiten, dritten, vierten und fünften Ausführungsform enthält teilreduziertes Silberorthophosphat.

Die erste und die dritte Ausführungsform unterscheiden sich nur dadurch, dass bei der dritten Ausführungsform das Silberorthophosphat vor der Teilreduktion durch wiederholtes Waschen gereinigt wird. Durch diese vorgezogene Reinigung vereinfachen sich die weiteren Verfahrensschritte und insbesondere die abschließende Reinigung des teilreduzierten Silberorthophosphates. In gleicher Weise unterscheiden sich auch die vierte und die zweite Ausführungsform.

Bei der ersten und dritten Ausführungsform wird das Silberphosphat vor der Reduktion teilweise in Lösung gebracht. Bei der zweiten, vierten und fünften Ausführungsform wird das Reduktionsmittel unmittelbar der wäßrigen Suspension des Silberorthophosphats zugesetzt. Die letztere Verfahrensführung hat sich als besonders vorteilhaft erwiesen.

Im Rahmen der vorliegenden Erfindung wird der Begriff "Feststoff" als Oberbegriff für die Bezeichnung von Silberorthophosphat und teilreduziertem Silberorthophosphat verwendet. Für andere feste Materialien, die weitere Bestandteile des erfindungsgemäßen Kunststoffproduktes sein können, werden andere Begriffe verwendet, beispielsweise der Begriff "Füllstoff". Der Begriff "Feststoff" bezieht sich also nicht auf derartige weitere Bestandteile oder Zusatzstoffe, es sei denn, dass ausdrücklich etwas anderes angegeben ist.

Das nach dem erfindungsgemäßen Verfahren erhältliche Kunststoffprodukt setzt Silberionen in der für die erfindungsgemäße Wirkung erforderlichen Konzentration über einen ausreichend langen Zeitraum frei. Die Silberionenkonzentration ist hoch genug, dass antimikrobielle Wirksamkeit zuverlässig erzielt wird. Sie wird aber nicht so groß, dass zytotoxische Wirkungen auftreten können.

In besonders vorteilhafter Weise setzen die erfindungsgemäßen Kunststoffprodukte gemäß der ersten bis fünften Ausführungsform Silberionen frei, insbesondere die der zweiten, vierten und fünften Ausführungsform und ganz besonders die der fünften Ausführungsform. Bei gleicher Wirkstoffkonzentration, d.h. insbesondere bei gleichem Silberanteil über alle Oxidationsstufen (also als metallisches Silber und im Silberphosphat), zeigen diese erfindungsgemäßen Kunststoffprodukte eine wesentlich höhere antimikrobielle Wirksamkeit als das Kunstoffprodukt gemäß WO 2004/024205. Die gegenüber dem Stand der Technik signifikant höhere antimikrobielle Wirksamkeit ist ein wesentlicher Vorteil der vorliegenden Erfindung.

Die WO 2004/024205 offenbart die Aktivierung von kolloidalem Silber durch Zusatz von beispielsweise Silberphosphat. Im Unterschied dazu gehen die erste bis fünfte Ausführungsform der vorliegenden Erfindung von Silberphosphat aus, welches anschließend mit metallischem Silber aktiviert wird.

Es bestehen erhebliche strukturelle Unterschiede zwischen der Kombination aus kolloidalem Silber und Silberphosphat gemäß der WO 2004/024205 (und insbesondere gemäß deren Beispielen 7 und 8) einerseits und dem teilreduzierten Silberphosphat gemäß der vorliegenden Erfindung andererseits. Die vorliegende Erfindung erlaubt die Erzeugung von Silberphosphatpartikeln, an deren Oberfläche sich metallisches Silber befindet, wobei Silberphosphat und metallisches Silber sich in direktem Kontakt befinden. Derartige Teilchen werden nach der Lehre der WO 2004/024205 nicht erhalten. Die genannten Unterschiede in der Struktur ergeben sich aus der unterschiedlichen Verfahrensführung.

In Beispiel 7 der WO 2004/025204 wird auf dem Füllstoff Bariumsulfat metallisches Silber abgeschieden. Anschließend wird Silberorthophosphat gefällt. Auf diese Weise wird mit metallischem Silber beschichtetes Bariumsulfat und freies Silberorthophosphat erzeugt.

Bei der Herstellung des teilreduzierten Silberorthophosphats gemäß der vorliegenden Erfindung wird zunächst das Silberorthophosphat gefällt. Bei dieser Fällung ist ein Füllstoff nicht anwesend. Die anschließende Reduktion erzeugt den direkten Silberphosphat-Silber-Kontakt und damit mikroskopische elektrochemische Halbelemente. Diese besondere Struktur hat die wesentlich verbesserte antimikrobielle Aktivität zur Folge.

Bei Kunststoffprodukten, die das erfindungsgemäße teilreduzierte Silberphosphat enthalten, wird überdies eine überraschend hohe Anfangsgeschwindigkeit der Silberfreisetzung beobachtet. Dies ist insbesondere bei klinischen Anwendungen erwünscht, damit während der Implantation eingebrachte Keime rasch abgetötet werden. Im Vergleich zu Kunststoffprodukten gemäß WO 2004/024205 kann die Infektionsrate bei Implantationen erheblich gesenkt werden. Wollte man bei Kunststoffprodukten gemäß WO 2004/024205 eine vergleichbare Anfangsgeschwindigkeit der Silberfreisetzung und damit einen vergleichbar schnellen Eintritt der antimikrobiellen Wirksamkeit erzielen, müßte man die Silberkonzentration so weit erhöhen, dass keine zytotoxische Unbedenklichkeit mehr gegeben wäre.

Die erfindungsgemäßen Kunststoffprodukte weisen eine gute Photostabilität auf. Dies ist besonders überraschend im Hinblick auf die Offenbarung der EP 0 251 783 A2, in der angegeben ist, dass gemäß der Lehre dieses Dokumentes sich die Photostabilität von Silberphosphat schlechter verbessern lässt als diejenige von Silberchlorid.

Ein wesentlicher Vorteil ist darin zu sehen, dass es bei dem erfindungsgemäßen Verfahren nicht erforderlich ist, zur Erzielung der Photostabilität das Silberphosphat auf ein anorganisches Trägermaterial aufzubringen. Vielmehr ist es erfindungsgemäß besonders bevorzugt, dass das teilreduzierte Silberphosphat nicht auf ein anorganisches Trägermaterial und insbesondere nicht auf ein physiologisch inertes anorganisches Oxidmaterial wie Titandioxid oder allgemeiner Oxide des Titans, Magnesiums, Aluminiums, Siliziums, Cers, Zirconiums, Hafniums, Niobs und Tantals oder auf Calciumhydroxylapatit oder Bariumsulfat aufgebracht wird. Dementsprechend sind die erfindungsgemäßen Kunststoffprodukte vorzugsweise frei von einem anorganischen Trägermaterial für das teilreduzierte Silberphosphat und insbesondere frei von den vorstehend genannten Trägermaterialien. Gemäß einer Ausführungsform werden bei dem erfindungsgemäßen Verfahren die vorstehend genannten Trägermaterialien überhaupt nicht verwendet, also weder als Trägermaterial noch als Zusatz wie beispielsweise als Füllstoff. In diesem Fall sind die erfindungsgemäßen Kunststoffprodukte frei von Oxiden des Titans, Magnesiums, Aluminiums, Siliciums, Cers, Zirconiums, Hafniums, Niobs und Tantals sowie von Calciumhydroxylapatit und Bariumsulfat.

Die erfindungsgemäß erzielte Verbesserung der Photostabilität wird erzielt durch wiederholtes Waschen des Silberorthophosphates oder des teilreduzierten Silberorthophosphates, bis die spezifische Leitfähigkeit der letzten Probe Waschwasser nach Abtrennung von dem Feststoff einen Wert unter 50 µS/cm im Falle des Silberorthophosphates oder einen Wert unter 20 µS/cm im Falle des teilreduzierten Silberorthophosphates aufweist. Es ist überraschend, dass sich eine befriedigende Photostabilität mit Hilfe eines derart kontrollierten Waschvorganges erzielen lässt.

Im Rahmen der vorliegenden Erfindung wird der Begriff "Kunststoffprodukt" so gebraucht, dass er sich auf Halbzeuge und gebrauchsfertige Erzeugnisse bezieht, deren Oberfläche mindestens teilweise aus dem erfindungsgemäßen Kunststoff besteht. Das Kunststoffprodukt kann vollständig aus dem erfindungsgemäßen Kunststoff bestehen. Die Erfindung ist aber nicht auf solche Kunststoffprodukte beschränkt.

Gemäß aller Ausführungsformen der Erfindung wird zunächst eine Lösung eines Silbersalzes in wässrigem Ammoniak hergestellt.

Zu diesem Zweck kann ein beliebiges Silbersalz mit ausreichender Wasserlöslichkeit verwendet werden. Ein bevorzugtes Silbersalz ist Silbernitrat.

Aus dieser Lösung wird Silberorthophosphat durch Zugabe von Phosphorsäure ausgefällt. Diese Ausfällung wird in dem Fachmann bekannter Weise so geführt, dass das Silberorthophosphat in Suspension erhalten wird. Die suspendierten Feststoffteilchen aus Silberorthophosphat haben die erfindungsgemäß erwünschte geringe Teilchengröße. Aus den kleinen Teilchen können die Silberionen im Kunststoff besonders gut freigesetzt werden. Phosphorsäure wird zur Ausfällung des Silberorthophosphats so lange zugegeben, bis der pH-Wert der Suspension zwischen 6,0 und 8,0 liegt.

Das Silberorthophosphat wird dann aus der Suspension abgetrennt. Die Abtrennung erfolgt vorzugsweise durch Zentrifugieren.

Gemäß der dritten, vierten und fünften Ausführungsform der Erfindung wird das Silberorthophosphat anschließend wiederholt mit Portionen von deionisiertem Wasser gewaschen. Zu diesem Zweck wird das Silberorthophosphat vorzugsweise für jeden Waschvorgang zunächst in Reinstwasser dispergiert und anschließend durch Zentrifugieren wieder abgetrennt. Die Waschvorgänge werden so oft wiederholt, bis die spezifische Leitfähigkeit des Waschwassers nach Abtrennung von dem Feststoff einen Wert unter 50 µS/cm aufweist.

Die spezifische elektrische Leitfähigkeit ist das Reziproke des spezifischen Widerstandes. Die Einheit ist (Ω cm)⁻¹ bzw. S/cm. Hierbei ist S = 1/Ω die Kurzform für Siemens, die Einheit des elektrischen Leitwertes, welches definiert ist als das Reziproke des elektrischen Widerstandes. Die elektrische Leitfähigkeit hängt von der Temperatur ab sowie bei Ionenleitern von der Konzentration, dem Dissoziationsgrad und dem Lösungsmittel. Für die Zwecke der vorliegenden Erfindung bezieht sich die elektrische Leitfähigkeit auf die Referenztemperatur 25°C.

Leitfähigkeitsmessgeräte werden auch als Konduktometer bezeichnet. Erfindungsgemäß geeignete Konduktometer sind unter den Bezeichnungen Sartorius PP-20 und Sartorius PP-50 im Handel erhältlich. Hersteller ist die Sartorius AG, Weender Landstraße 94-108, Göttingen, Deutschland. Die von der Sartorius AG für diese Konduktometer angebotenen Messzellen PY-CO1 - PY-CO3 sind Vier-Elektroden-Messzellen mit Platinelektroden. Die Leitfähigkeitsmessung wird mit diesen Konduktometern unter Anwendung einer Wechselspannung bzw. eines Wechselstromes durchgeführt. Die gebräuchlichste Frequenz ist 50 Hz.

Das durch wiederholtes Waschen ausreichend gereinigte Silberorthophosphat wird gemäß der fünften Ausführungsform anschließend getrocknet. Das Trocknen kann in beliebiger Weise erfolgen, beispielsweise in einem Trockenschrank. Das so erhaltene getrocknete Silberorthophosphat ist dann geeignet für die Einarbeitung in ein Kunststoffvorprodukt.

Der Begriff "Kunststoffvorprodukt" bezeichnet im Rahmen der vorliegenden Erfindung Materialien, aus denen durch Formen Kunststoffformteile bzw. das "Kunststoffprodukt" hergestellt werden können. Das Kunststoffvorprodukt kann beispielsweise in Form von Granulat oder Pellets oder als Pulver vorliegen. Das Kunststoffvorprodukt kann ein Einkomponentensystem sein, bei dem die eine Komponente durch Formen in ein Kunststoffformteil überführt werden kann. Das Kunststoffvorprodukt kann aber auch ein Mehrkomponentensystem sein, bei dem die Komponenten unmittelbar vor dem Formen zunächst miteinander vermischt werden und eine Aushärtung des Kunststoffes beim Formen bzw. nach dem Formen stattfindet. Füllststoffe oder Additive sind keine Kunststoffvorprodukte im Sinne der vorliegenden Erfindung.

Wesentlicher Bestandteil des Kunststoffvorproduktes sind polymere Verbindungen, insbesondere solche, die im medizinischen Bereich üblicherweise Verwendung finden.

Bevorzugte Polymere sind Polyurethane, Polycarbonate, Silicone, Polyvinylchlorid, Polyacrylate, Polyester, Polyolefine, Polystyrol und Polyamide. Polyethylen, Polypropylen, vernetzte Polysiloxane, Polymere auf (Meth)acrylat-Basis, Zellulose und Zellulose-Derivate, ABS, Tetrafluorethylenpolymere, Polyethylenterephthalate sowie die entsprechenden Copolymere können als polymere Verbindungen eingesetzt werden. Als Beispiele für erfindungsgemäß geeignete Copolymere seien Styrol-Acrylnitril-Copolymere sowie Copolymere aus Ethylen und einem höheren α-Olefin genannt.

Neben einem oder mehreren polymeren Materialien kann das Vorprodukt Additive umfassen. Additive können beispielsweise anorganische oder organische Substanzen sein. Das Vorprodukt kann insbesondere alle anorganischen als auch organischen Substanzen umfassen, die inert und medizinisch unbedenklich sind. Dazu gehören insbesondere in Wasser schwer lösliche Materialien wie Zirkonium Dioxid, Zirkonium Silikat, Titandioxid, Zinkoxid, Calciumfluorid, Calciumcarbonat, Alumosilikate, Hydroxylapatit, Fluorapatit, Bariumsulphat, Calciumsulphat und Kohlenstoff in seinen verschiedenen Erscheinungsformen. Solche Substanzen können bereits als Füllstoffe in einem kommerziell erhältlichen Kunststoffvorprodukt enthalten sein, andererseits können sie einem kommerziell erhältlichen Kunststoffvorprodukt im Rahmen der vorliegenden Erfindung auch als weitere Komponente zugefügt und in das Kunststoffvorprodukt eingearbeitet werden.

Das Kunststoffvorprodukt kann darüber hinaus weitere Additive enthalten, wie z.B. Pigmente, Antioxidantien, Weichmacher, Photostabilisatoren für das Polymer usw.

Gemäß der ersten Ausführungsform der Erfindung wird wie oben beschrieben zunächst eine Suspension von Silberorthophosphat hergestellt. Das Silberorthophosphat wird dann abgetrennt und in deionisiertem Wasser erneut suspendiert. Anschließend wird wässriger Ammoniak zu der Suspension gegeben. Die Mischung wird auf eine Temperatur im Bereich von 40-90°C erwärmt. Die Menge an Ammoniak wird dabei so bemessen, dass bei der gewählten Temperatur im Bereich von 40-90°C eine Menge von 1 Gew.% bis 80 Gew.% des in der Mischung vorhandenen Silbers bzw. der in der Mischung vorhandenen Silberionen in Lösung geht.

Durch den Übergang in Lösung sollen die Silberionen in größerer Menge für den anschließenden Reduktionsschritt verfügbar gemacht werden. Für die Reduktion stehen dann einerseits die in Lösung gebrachten Silberionen zur Verfügung. Andererseits kann die Reduktion natürlich auch an der Oberfläche der suspendierten Teilchen stattfinden.

Das Reduktionsmittel wird bei der gewählten Temperatur im Bereich von 40-90°C in einer Menge zugegeben, die ausreicht, mindestens die in Lösung befindlichen Silberionen zu metallischem Silber zu reduzieren. Natürlich kann man einen gewissen Überschuss an Reduktionsmittel einsetzen. Vorzugsweise ist die Menge an Reduktionsmittel groß genug, um sowohl die in Lösung befindlichen Silberionen als auch die an der Oberfläche der suspendierten Teilchen befindlichen Silberionen zu reduzieren.

Über den Einsatz von Ammoniak und Reduktionsmittel lässt sich die erzeugte Menge an metallischem Silber steuern. Gleichzeitig wird damit die Färbung des erzeugten Feststoffes eingestellt.

Es wird angenommen, dass bei dem Verfahren gemäß der ersten und dritten Ausführungsform der Erfindung metallische Silberteilchen auf Silberphosphat abgeschieden werden. Allgemeiner gesagt, werden bei dem Verfahren gemäß der ersten bis fünften Ausführungsform Teilchen gebildet, die teilweise aus Silberorthophosphat und teilweise aus metallischem Silber bestehen. Dadurch entstehen viele mikroskopische elektrochemische Halbelemente Ag/Ag₃PO₄, deren Potenziale nur von der Phosphationenkonzentration in der umgebenden wässrigen Phase abhängen. Thermodynamisch lässt sich zeigen, dass dadurch die freie Enthalpie für die Reaktion Ag⁰ → Ag⁺ + e in den negativen Bereich verschoben wird und damit die Reduktion von Silberionen zu Silber erschwert wird.

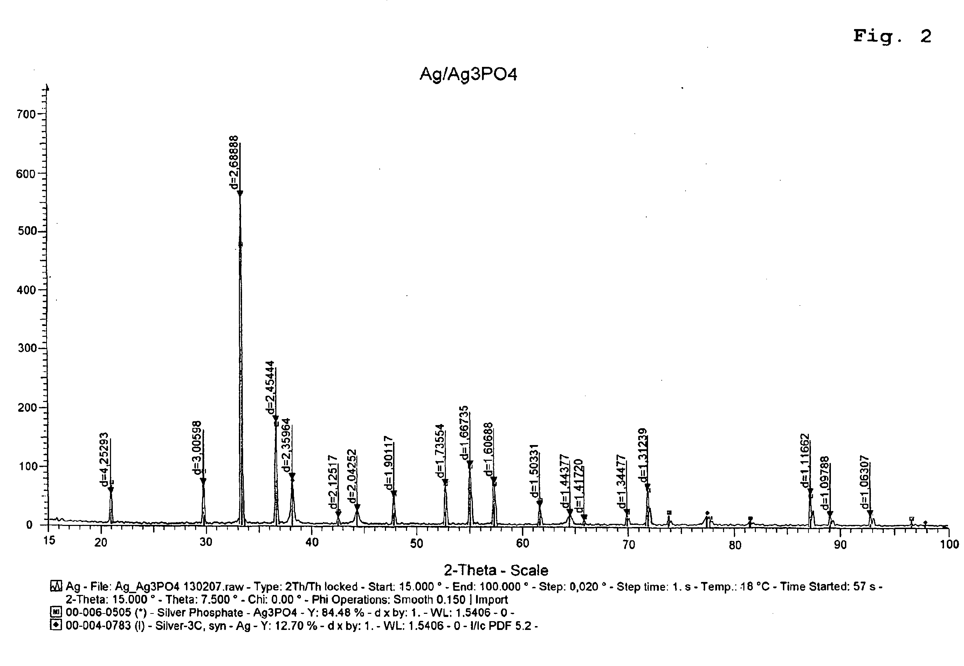

Das Produkt der Reduktion wird als teilreduziertes Silberorthophosphat bezeichnet. Die Figur 2 zeigt ein Röntgenspektrum eines solchen teilreduzierten Silberorthophosphates. In dem Röntgenspektrum sind sowohl Peaks für Silberorthophosphat als auch Banden für metallisches Silber zu erkennen.

Für den Reduktionsschritt können verschiedene Reduktionsmittel verwendet werden. Bevorzugte Reduktionsmittel sind verschiedene Zucker, Aldehyde, Hydrochinon, Weinsäure, Salze der Zitronensäure (Citrate) und Hydrazin. Ein besonders bevorzugtes Reduktionsmittel ist Glucose.

Wie bereits erwähnt, besteht zwischen der ersten und der dritten Ausführungsform der Erfindung nur ein geringer Unterschied. Gemäß der dritten Auführungsform wird das Silberorthophosphat vor der Teilreduktion so lange gewaschen, bis es dem Reinheitskriterium gemäß der ersten Ausführungsform genügt, d.h. bis es eine Leitfähigkeit unter 50 µS/cm aufweist.

Wie bereits angesprochen, soll die Menge an Reduktionsmittel so bemessen sein, dass die in Lösung befindlichen Silberionen zu metallischem Silber reduziert werden. Dennoch können unter Umständen geringe Mengen an Silberionen in der Lösung verbleiben, deshalb ist es bevorzugt, dass vor dem Abtrennen des teilreduzierten Orthophosphates der Suspension Phosphorsäure zugesetzt wird, um einen pH-Wert im Bereich von 6,0 bis 8,0 einzustellen. Dadurch werden eventuell in Lösung befindliche Silberionen in Silberorthophosphat überführt und aus der Lösung in Suspension ausgefällt.

Die Reinigung des teilreduzierten Silberorthophosphats erfolgt genauso durch wiederholtes Waschen wie die Reinigung des reinen Silberorthophosphats. Allerdings ist erfindungsgemäß vorgesehen, dass die Leitfähigkeit des letzten Waschwassers bei teilreduziertem Silberorthophosphat weniger als 20 µS/cm beträgt.

Bei der zweiten und vierten Ausführungsform wird die Teilreduktion durchgeführt, ohne dass zuvor ein Teil des Silberorthophosphats mit Hilfe von Ammoniak in Lösung gebracht wird. Hier findet die Reduktion ausschließlich heterogen statt, d.h. das in Lösung befindliche Reduktionsmittel reagiert mit dem als suspendierter Feststoff vorliegenden Silberorthophosphat. Die Menge an Reduktionsmittel wird bei dieser Prozessführung im Hinblick auf die Menge an suspendiertem Silberorthophosphat so gewählt, dass ein Teil des vorhandenen Silberorthophosphats zu metallischem Silber reduziert wird. Dabei wird eine Menge an Reduktionsmittel verwendet, die gemäß der Stöchiometrie der Reduktion geeignet ist, 1 Gew.% bis 65 Gew.% des suspendierten Silberorthophosphats zu metallischem Silber zu reduzieren. Wenn die Menge an Reduktionsmittel in diesem Bereich liegt, dann wird ein teilreduziertes Silberorthophosphat erzeugt, das im Allgemeinen einen Überschuss an Silberionen des Silberorthophosphats über Silberatome des metallischen Silbers aufweist und jedenfalls nicht mehr als ein Silberatom je Silberion.

Das Verfahren gemäß der fünften Ausführungsform ist dem der vierten Ausführungsform ähnlich und betrifft eine besonders bevorzugte Prozessführung. Hier wird Citrat, d.h. ein Salz der Zitronensäure, vorzugsweise Trinatriumcitrat als Reduktionsmittel verwendet, welches zusätzlich als Dispersionsmittel für den suspendierten Feststoff wirkt, wodurch im Zusammenwirken mit den übrigen Merkmalen dieser Prozessführung ein Produkt mit besonders vorteilhaften Eigenschaften erzeugt wird. Die Reduktion wird bei einer Temperatur von 70°C bis 100°C, vorzugsweise 90°C bis 100°C durchgeführt. Das im ersten Teil des Verfahrens gebildete Silberorthophosphat wird gegebenenfalls vor der Reduktion zerkleinert, insbesondere um Agglomerate, die sich bei der Trocknung gebildet haben können, wieder in kleine diskrete Teilchen zu überführen.

Bei dem erfindungsgemäßen Verfahren wird vorzugsweise ausschließlich Reinstwasser verwendet. Reinstwasser kann beispielsweise durch eine Destillation über eine mehrbödige Kolonne erhalten werden. Reinstwasser kann aber auch durch Deionisation erhalten werden. Die Leitfähigkeit des Reinstwassers ist sehr gering und liegt in jedem Fall unterhalb 5 µS/cm.

Durch die Erfindung wird Silberphosphat als Mittel für die antimikrobielle Ausrüstung von Kunststoffen verfügbar gemacht, wobei die so ausgerüsteten Kunststoffe nicht das Problem der Photoinstabilität aufweisen. Insbesondere ist es nicht erforderlich, dass das Silberorthophosphat vor dem Einarbeiten in das Kunststoffvorprodukt auf einen Träger aufgebracht wird. Gemäß einer erfindungsgemäß bevorzugten Arbeitsweise wird das Silberorthophosphat oder das teilreduzierte Silberorthophosphat dem Kunststoffvorprodukt bzw. der Kunststoffmasse direkt zugegeben, ohne zuvor auf ein anorganisches Trägermaterial oder einen anorganischen Füllstoff aufgebracht oder mit einem solchen vermischt worden zu sein.

Andererseits ist die Erfindung aber auch nicht auf füllstofffreie Kunststoffprodukte beschränkt. Manche kommerziell erhältliche Kunststoffvorprodukte enthalten bereits einen Füllstoff und weitere Additive wie z.B. Antioxidantien, Pigmente, Weichmacher usw. Die Erfindung erstreckt sich auf Verfahren, bei denen solche Kunststoffvorprodukte eingesetzt werden, die bereits anorganische Füllstoffe enthalten.

Es ist gemäß der Erfindung auch möglich, dass das getrocknete Silberorthophosphat oder das getrocknete teilreduzierte Silberorthophosphat zunächst mit einem anorganischen Füllstoff vermischt wird, bevor die Mischung in das Kunststoffvorprodukt eingearbeitet wird. Das kann beispielsweise zweckmäßig sein, um die Bildung von Agglomeraten zu verhindern, wenn das Silberorthophosphat oder das teilreduzierte Silberorthophospat vor der Weiterverarbeitung längere Zeit gelagert werden soll.

Die Erfindung erstreckt sich auch auf Verfahren, bei denen zusätzlich mindestens ein weiterers in Wasser schwer lösliches Material in das Kunststoffvorprodukt eingearbeitet wird. Das weitere Material kann beispielsweise Zirkoniumdioxid, Zirkoniumsilikat, Titandioxid, Zinkoxid, Calciumfluorid, Calciumcarbonat, ein Alumosilikat, Hydroxalapatit, Fluorapatit, Bariumsulphat, Calciumsulphat oder Kohlenstoff in einer seiner Erscheinungsformen sein, beispielsweise Graphit. Dabei kann man so vorgehen, dass man zunächst das Silberorthophosphat oder das teilreduzierte Silberorthophosphat in das Kunststoffvorprodukt einarbeitet und anschließend das weitere Material in das Kunststoffvorprodukt einarbeitet. Man kann aber auch so vorgehen, dass man zunächst das Silberorthophosphat oder das teilreduzierte Silberorthophosphat mit dem weiteren schwer löslichen Material vermischt und anschließend diese Mischung in das Kunststoffvorprodukt einarbeitet.

Ist das Kunststoffvorprodukt ein Zweikomponenten-System, dann kann das Silberorthophosphat oder das teilreduzierte Silberorthophosphat zunächst in eine Komponente eingemischt werden, bevor die zweite Komponente hinzugegeben wird.

Für die Einarbeitung des Silberorthophosphats, des teilreduzierten Silberorthophosphats und ggf. des weiteren in Wasser schwer löslichen Materials stehen dem Fachmann verschiedene Verfahren zur Verfügung. Die Einarbeitung erfolgt vorzugsweise mit Hilfe eines Mischers, Rührers, Kneters, Walzwerks oder Extruders.

Das Silberorthophosphat oder das teilreduzierte Silberorthophosphat werden vorzugsweise in einer Menge von 0,1 Gew.% bis 10 Gew.%, insbesondere 0,5 Gew.% bis 5 Gew.% und am meisten bevorzugt 1 Gew.% bis 3 Gew.%, bezogen auf das Gesamtgewicht des Kunststoffproduktes, in das Kunststoffvorprodukt eingearbeitet.

Wenn alle gewünschten Komponenten in das Kunststoffvorprodukt eingearbeitet worden sind, wird daraus das Kunststoffprodukt geformt. Vorzugsweise erfolgt das Formen durch Extrudieren, Spritzgießen, Pressen oder Heißpressen.

Das Extrudieren ist insoweit ein Sonderfall, als es einerseits für die Einarbeitung von Feststoffen in das Kunststoffvorprodukt und andererseits für das Formen des Kunststoffproduktes eingesetzt werden kann. Durch Wahl eines geeigneten Extruders können somit das Einarbeiten von Feststoffen in das Kunststoffvorprodukt und die Formung des Kunststoffproduktes mit Hilfe derselben Apparatur durchgeführt werden.

Die erfindungsgemäßen Kunststoffprodukte sind neu aufgrund ihrer Zusammensetzung und aufgrund ihrer Photostabilität. Es können die verschiedensten Produkte geformt werden.

Beispiele für Medizinprodukte sind Venenkatheter, periphere Venenkanülen, Sheldon-Katheter, Hickman-Typ-Katheter, Portkatheter, wobei mindestens die Portkammer aus erfindungsgemäß hergestelltem Material besteht, zweckmäßig auch alle weiteren Bestandteile desselben, Ventrikelkatheter, Lumbalkatheter, Peritonealkatheter, Blasenkatheter, Nephrostomie-Katheter, Uretherstents, Toraxdrainagen sowie das angeschlossene Saugsystem, Endotracheale Tuben, Zahnbürsten (Borsten und Griff), chirurgisches Nahtmaterial, Fadenmaterial zur Herstellung von antimikrobiellen Textilien, Materialien für die antimikrobielle Beschichtung, z.B. von Schläuchen für die Beatmung, antimikrobielle Wundabdeckungen und Dressings für Brandverletzungen.

Die Erfindung ist aber nicht auf medizinische Anwendungen beschränkt. Eine antimikrobielle Ausrüstung ist auch bei Kunststoffprodukten erwünscht, die von unterschiedlichen Personen berührt werden. Beispiele für solche Produkte sind Telefonhörer, Türklinken oder Tastaturen für Computer.

Die erfindungsgemäßen Kunststoffprodukte sind nach den verschiedenen Ausführungsformen des erfindungsgemäßen Verfahrens erhältlich.

Das erfindungsgemäße Kunststoffprodukt enthält teilreduziertes Silberorthophosphat und ist frei von kolloidalem Metall.

Das erfindungsgemäße Kunststoffprodukt enthält Kunststoff und darin verteiltes teilreduziertes Silberorthophosphat, welches aus Silberorthophosphatteilchen besteht, die teilweise zu metallischem Silber reduziert worden sind. In den Teilchen besteht ein direkter Kontakt zwischen Silberorthophosphat und metallischem Silber. Die Oberfläche der Teilchen besteht teilweise aus Silberorthophosphat und teilweise aus metallischem Silber.

Das teilreduzierte Silberorthophosphat weist vorzugsweise ein Verhältnis von Silberionen des Silberorthophosphats zu Silberatomen des metallischen Silbers im Bereich von 95:5 bis 55:45 auf, d.h. die Silberionen liegen im Vergleich zu den Silberatomen im Überschuss vor.

Die Größe der Teilchen aus teilreduziertem Silberphosphat kann beispielsweise durch Laserbeugung gemessen werden. Die Messung kann nach DIN ISO 13320-1:1999-11 erfolgen. Soweit nachfolgend und in den Patentansprüchen Teilchengrößen angegeben werden, sind diese dahingehend zu verstehen, dass es sich um Teilchengrößen gemäß Messung durch Laserbeugung, insbesondere gemäß DIN ISO 133320-1:1999-11 handelt. Ein geeignetes Meßgerät ist beispielsweise unter der Bezeichnung "SYMPATEC HELOS (H2023) & SUCELL" im Handel erhältlich.

Vorzugsweise haben 95 Gew.%, insbesondere 98 Gew.% und am meisten bevorzugt 99 Gew.% der Teilchen eine Größe im Bereich von 0,5 bis 50 µm. Hier handelt es sich um den Bereich für die absoluten Größen der Teilchen (und nicht um einen Bereich für Mittelwerte).

Dem Fachmann sind unterschiedliche Formen der Teilchengrößenverteilung bekannt. Die Teilchengrößenverteilung kann monomodal, bimodal oder multimodal sein, d.h., sie kann ein Maximum oder mehrere Maxima aufweisen. Vorzugsweise handelt es sich um eine Normalverteilung (Gauß-Verteilung) mit einem Maximum bzw. um eine Verteilung, die in etwa einer Normalverteilung entspricht. Das Maximum liegt vorzugsweise im Bereich von 2 bis 20 µm, insbesondere 3 bis 12 µm und am meisten bevorzugt 4 bis 10 µm.

Die Erfindung betrifft auch ein Kunststoffvorprodukt, das Kunststoff und darin verteiltes teilreduziertes Silberorthophosphat enthält, welches aus Silberorthophosphatteilchen besteht, die teilweise zu metallischem Silber reduziert worden sind, so dass in den Teilchen ein direkter Kontakt zwischen Silberorthophosphat und metallischem Silber vorliegt und die Oberfläche der Teilchen teilweise aus Silberphosphat und teilweise aus metallischem Silber besteht. Aus diesem Kunststoffvorprodukt kann durch Formung das Kunststoffprodukt hergestellt werden. Die vorstehenden Ausführungen über das in dem Kunststoffprodukt enthaltene Silberorthophosphat treffen auch auf das in dem Kunststoffvorprodukt enthaltene Silberorthophosphat zu.

Sowohl in dem Kunststoffprodukt als auch in dem Kunststoffvorprodukt umfasst der Kunststoff vorzugsweise Polyurethan, Polycarbonat, Silicon, Polyvinylchlorid, Polyacrylat, Polyester, Polyolefin, Polystyrol oder Polyamid.

Das erfindungsgemäße Kunststoffprodukt kann ausschließlich aus antimikrobiell ausgerüstetem Kunststoff bestehen, wie er nach einem erfindungsgemäßen Verfahren erhältlich ist, und insbesondere aus antimikrobiell ausgerüstetem Kunststoff, der Kunststoff und darin verteiltes teilreduziertes Silberorthophosphat enthält.

Das Kunststoffprodukt kann aber auch so aufgebaut sein, dass mindestens ein Teil desselben aus dem antimikrobiell ausgerüsteten Kunststoff besteht und mindestens ein anderer Teil desselben aus einem anderen Material besteht. Das andere Material kann aus Metallen, Glas, Keramik und Kunststoffen ausgewählt sein.

Das Kunststoffprodukt kann dabei so aufgebaut sein, dass seine Oberfläche mindestens teilweise aus antimikrobiell ausgerüstetem Kunststoff und mindestens teilweise aus anderem Material besteht. Alternativ kann das Kunststoffprodukt so aufgebaut sein, dass der antimikrobiell ausgerüstete Kunststoff das andere Material umschließt, so dass die Oberfläche des Produktes ausschließlich aus diesem Kunststoff besteht.

Die Erfindung wird nachfolgend anhand von Beispielen näher erläutert.

### Beispiel 1 - Herstellung von Silberorthophosphat

Es wurde ein Dreihalskolben mit Glasrührer in einem Wasserbad verwendet. In dem Kolben wurden 700 ml Reinstwasser (deionisiertes Wasser) vorgelegt und darin 121,7 g AgNO₃ gelöst. Der Lösung wurden 120 ml einer 25%igen NH₃-Lösung zugefügt. Der anfängliche braune Niederschlag wurde dabei wieder vollständig aufgelöst.

Der Kolbeninhalt wurde auf 60°C erwärmt. Nach dem Erreichen der Endtemperatur wurde begonnen, langsam 200 ml einer 4-molaren H₃PO₄-Lösung aus einem Tropftrichter zuzutropfen. Es bildete sich an der Eintropfstelle ein gelblicher Niederschlag, der sich zunächst wieder auflöste, mit abnehmendem pH-Wert aber beständig blieb.

Nach Abschluss der Phosphorsäurezugabe wurde der pH-Wert gemessen. Er lag innerhalb des Bereiches von 6,0 bis 6,8. Durch Zugabe eines Tropfens Phosphorsäure in das klare Filtrat wurde gezeigt, dass die Fällung vollständig war.

Nach dem Erkalten wurde aus der so erhaltenen Suspension der Feststoff durch Zentrifugieren abgetrennt. Anschließend wurde der Feststoff wieder in einem großen Volumen deionisiertem Wasser dispergiert. Aus dieser wässrigen Suspension wurde der Feststoff erneut abgetrennt. Dieser Waschvorgang wurde mehrfach wiederholt. Das letzte Waschfiltrat wies eine elektrische Leitfähigkeit von weniger als 50 µS/cm auf.

Anschließend wurde der gewaschene Feststoff bei 80 bis 90°C in einem Umlufttrockenschrank getrocknet.

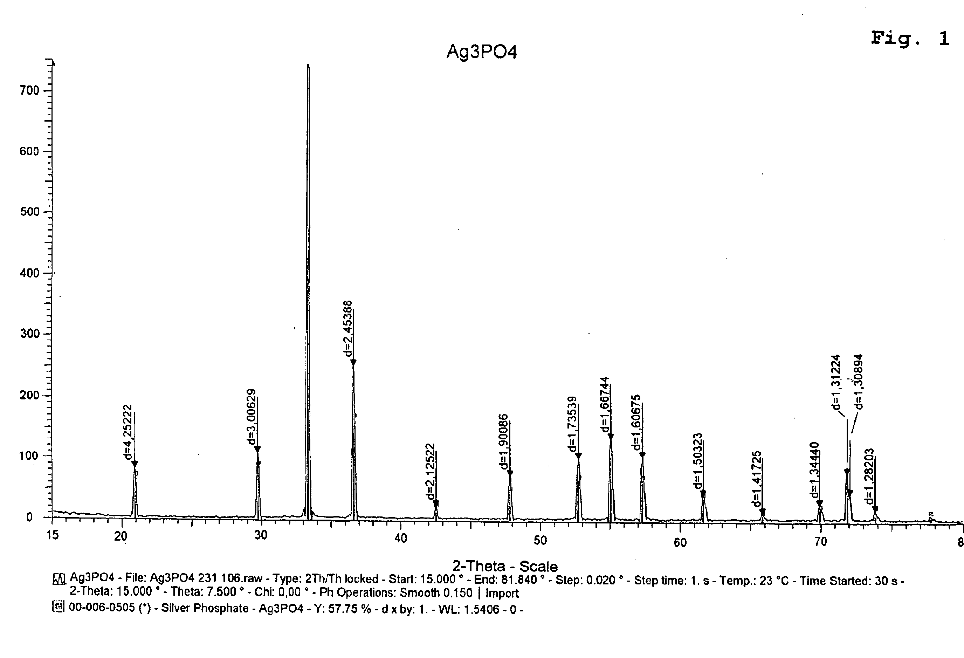

Eine Röntgendiffraktionsaufnahme des erhaltenen Feststoffs ist in Figur 1 gezeigt. Es handelt sich um reines kristallines Silberorthophosphat.

### Beispiel 2 - Prüfung der Lichtbeständigkeit

Das nach Beispiel 1 hergestellte Silberorthophosphat wurde sowohl in trockener Form als auch in einer Suspension in gewöhnlichem Leitungswasser in Glasgefäßen bzw. PE-Gefäßen über 5 Monate im Freien dem Tageslicht ausgesetzt. Es wurde keine Farbveränderung beobachtet.

Proben von reinem Silberorthophosphat und Proben von 10% Silberorthophosphat auf Bariumsulfat wurden belichtet und unbelichtet verglichen. Dazu wurden der Gesamtsilbergehalt und der Gehalt an ionischem Silber in den Proben analytisch gemessen. Die belichteten Proben waren einer Belichtung durch Tageslicht über 8 Wochen im Freien ausgesetzt. Die Ergebnisse sind in Tabelle 1 wiedergegeben:

**Tabelle 1 - Analytische Silbergehalte vor und nach Belichtung der Proben**

| Probe | Nach Belichtung | | Ohne Belichtung | |
|---|---|---|---|---|
| | Ag-gesamt/% | Ag⁺/% | Ag-gesamt/% | Ag⁺/% |
| Ag₃PO₄ | 78,89 +/- 1,41 | 78,83 +/- 1,61 | 80,58 +/- 5,96 | 78,38 +/- 0,08 |
| 10% Ag₃PO₄ auf BaSO₄ | 7, 67 +/- 0,10 | 7,92 +/- 0,20 | 7,62 +/- 0, 07 | 7,80 +/- 0,08 |

Die in der Tabelle angegebenen Fehlerbereiche sind aus Vielfachmessungen errechnet. Der theoretische Silbergehalt in Ag₃PO₄ beträgt 77,31 Gew.%.

Wird dem Leitungswasser für die Suspendierung des Silberorthophosphates Glucose als Reduktionsmittel zugesetzt, so ist bereits nach zwei Stunden Belichtung die erwartete oberflächliche Reduktion in einer Farbverschiebung nach grün zu beobachten. Eine Möglichkeit, solchen überraschenden Farbveränderungen in Kunststoffprodukten, die reduzierende -Substanzen enthalten, vorzubeugen, wurde in der Teilreduktion des reinen Silberorthophosphates gemäß der ersten und zweiten Ausführungsform der Erfindung gefunden.

### Beispiel 3 - Teilreduktion von Ag₃PO₄

5 g Ag₃PO₄ wurden in 150 ml Reinstwasser suspendiert. Bei dem Ag₃PO₄ handelte es sich um getrocknetes Material, das nach Verfahren gemäß Beispiel 1 hergestellt worden war. Nach Zugabe von 1,7 ml 25%iger NH₃-Lösung wurde die Suspension auf 60°C erwärmt. 1,1 g Glucosemonohydrat wurden in 150 ml Reinstwasser gelöst, in einen Tropftrichter überführt und nach Erreichen der Temperatur von 60°C langsam zu der Suspension zugetropft. Die Tropfzeit betrug zwischen 1,5 und 2 Stunden.

Nach Beendigung der Reduktion hatte sich eine blaugraue Suspension gebildet. Der pH-Wert lag zwischen 8 und 9. Eine Freisetzung von Ammoniak während der Reduktion war deutlich wahrzunehmen.

Der Suspension wurde Phosphorsäure zugegeben, um den pH-Wert auf einen Wert im Bereich von 6 bis 6,8 einzustellen. Dabei veränderte sich die Farbe von blaugrau nach grünbraun.

Der Feststoff wurde von der Flüssigkeit abgetrennt, erneut in Reinstwasser dispergiert und wieder abgetrennt. Das Abtrennen des Feststoffes erfolgte durch Zentrifugieren. Der Waschvorgang wurde viermal wiederholt. Die elektrische Leitfähigkeit des letzten Filtrates (Waschwassers) betrug <20 µS/cm. Anschließend wurde der Feststoff getrocknet.

Durch chemische Analyse der Zusammensetzung wurden folgende Werte ermittelt:
Ag⁺-Gehalt: 58,02 Gew.%
Ag⁰-Gehalt: 19,68 Gew.%

Eine Röntgendiffraktionsaufnahme dieses Produktes ist in Figur 2 gezeigt. Neben Peaks für Silberorthophosphat sind auch Banden für metallisches Silber zu erkennen.

### Beispiel 4 - Silberfreisetzung aus Silberorthophosphat bei verschiedenen pH-Werten (nicht erfindungsgemäß)

In drei Erlmeierkolben wurden jeweils 40 ml Reinstwasser vorgelegt. Die in der nachfolgenden Tabelle 2 angeführten Ausgangs-pH-Werte pH₀ würden eingestellt. Dann wurde jeweils 1 g Silberorthophosphat zugesetzt. Die Erlmeierkolben wurden verschlossen und drei Stunden bei Zimmertemperatur gesschüttelt. Danach wurden im klaren Filtrat jeweils der End-pH-Wert und die Silberkonzentration gemessen.

**Tabelle 2: Silberfreisetzung aus AG₃PO₄ bei verschiedenen pH-Werten**

| Vers.-Nr. | pH_{Anfang} | PH_{Ende} | Ag-Konz. mg/l |
|---|---|---|---|
| 1 | 9,15 | 7,44 | 6,8 |
| 2 | 3,77 | 7,40 | 26,4 |
| 3 | 5,20 | 7,40 | 10,0 |

Bei einem Ausgangs-pH-Wert von 3,77 wird eine verstärkte Löslichkeit beobachtet. (Ohne hydrolytischen Effekt sollte die Konzentration bei 5 mg/l liegen.)

Bei einem Einsatz des erfindungsgemäßen Kunststoffprodukts in saurem Milieu ist dieser Umstand zu beachten. Ebenso ist zu beachten, dass Silberphosphat eine Pufferwirkung besitzt. Die Freisetzung von Silberionen aus den erfindungsgemäßen Kunststoffprodukten wird natürlich wesentlich niedriger sein als die Silberfreisetzung in diesem Beispiel.

### Beispiel 5 - Freisetzung von Silberionen aus Silikonkunststoff (nicht erfindungsgemäß)

Ein gemäß Beispiel 1 hergestelltes reines Silberorthophosphat wurde in ein kommerziell erhältliches SilikonKunststoffvorprodukt eingearbeitet. Danach erhielt das Silikon-Kunststoffvorprodukt 1 Gew.% Silberphosphat entsprechend 0,77 Gew.% Silber. Das Vorprodukt wurde zu einer Folie geformt. Die Folie wurde in kleine Streifen zerschnitten.

5,02 g dieser kleinen Streifen wurden in 50 ml deionisiertem Wasser in einem verschlossenen Glasgefäß geschüttelt (Überkopfschüttler). Nach den in der folgenden Tabelle 3 angegebenen Elutionszeiten wurden jeweils 10 ml für die Silberbestimmung aus dem Gefäß entnommen und vor der folgenden Schüttelperiode das entnommene Volumen durch frisches deionisiertes Wasser ersetzt.

**Tabelle 3: Silberfreisetzung aus Silikonkunststoff in deionisiertem Wasser**

| Elutionszeit h | Gemessene Ag-Konzentration µg/l | Eluierte Ag-Gesamtmenge µg | Elutions geschwindigkeit µg/h |
|---|---|---|---|
| 0 | 0 | 0 | 0 |
| 2 | 161 | 8,05 | 4,03 |
| 4 | 167 | 9,96 | 1,00 |
| 6 | 171 | 11,83 | 0,94 |
| 8 | 164 | 13,19 | 0,68 |
| 72 | 393 | 26,28 | 0,20 |

Nach einer anfänglichen raschen Freisetzung von Silberionen (Freisetzung aus den Oberflächenbereichen) wurde eine anschließende Phase mit langsamerer Freisetzung beobachtet. Nach 72 Stunden sind erst ca. 0,07 Gew.% der im Kunststoff vorhandenen Gesamtsilbermenge eluiert worden. Daher kann davon ausgegangen werden, dass die antimikrobielle Wirkung sehr lange andauern wird.

### Beispiel 6 - Silberfreisetzung aus thermoplastischem Polyurethan (nicht erfindungsgemäß)

Gemäß Beispiel 1 hergestelltes Silberorthophosphat wurde zunächst mit Bariumsulfat gemischt. Die so erhaltene Mischung wurde in ein Kunststoffvorprodukt aus thermoplastischem Polyurethan eingearbeitet. Nach der Einarbeitung enhielt das Polyurethanvorprodukt 20 Gew.% Bariumsulfat und 6 Gew.% Silberorthophosphat.

Ein entsprechendes Kunststoffvorprodukt wurde unter Verwendung eines gemäß Beispiel 3 hergestellten teilreduzierten Silberorthophosphats hergestellt. Dieses Kunststoffvorprodukt enthielt 20 Gew.% Bariumsulfat und 6 Gew.% teilreduziertes Silberorthophosphat gemäß Beispiel 3.

Die beiden Vorprodukte wurden jeweils zu Bändern von 3,5 cm Breite und 0,5 mm Dicke extrudiert.

Jeweils 7,7 g der in mehrere Stücke geschnittenen Bänder (Oberfläche 280 cm²) wurden in 100 ml Reinstwasser in verschlossenen Gefäßen in einem Überkopfschüttler geschüttelt. Nach bestimmten Zeiten wurde die Flüssigkeit vollständig abgetrennt und der Silbergehalt in der Flüssigkeit bestimmt. Die Kunststoffproben wurden anschließend wieder in einer frischen Wassermenge von neuem geschüttelt.

Aus den analysierten Silbergehalten wurde die Gesamtmenge an abgebendem Silber in Abhängigkeit von der Elutionszeit errechnet. Die Ergebnisse sind in der Figur 3 graphisch dargestellt.

Weiterhin wurde die Silberfreisetzungsgeschwindigkeit, d.h. die Silberfreisetzung je Zeiteinheit errechnet. Die Ergebnisse sind in der Figur 4 graphisch dargestellt.

Mit Hilfe dieser Methode sollte ein offenes System, das für Durchströmungsprozesse charakteristisch ist, simuliert werden.

Erwartungsgemäß nimmt die Silberfreisetzung mit der Zeit ab. Auffällig ist, dass das Polyurethan mit teilreduziertem Silberorthophosphat in der Anfangesphase eine höhere Freisetzung aufweist als das Polyurethan mit reinem Silberorthophosphat. Nach einer gewissen Zeit nähern sich die Silberfreisetzungsgeschwindigkeiten der beiden verglichenen Proben an.

### Beispiel 7 - Antimikrobielle Wirksamkeit von Katheterschlauchmaterialien aus Silikon

6 Gewichtsteile gemäß Beispiel 1 hergestelltes Silberorthophosphat wurden mit 94 Gewichtsteilen Bariumsulphat vermischt. Die Mischung enthielt 4,6 Gew.% Ag⁺. Die Mischung wurde in ein Silikonkunststoffvorprodukt eingearbeitet. Das Kunststoffvorprodukt enthielt daraufhin 20 Gew.% der Mischung aus Bariumsulfat und Silberorthophosphat. Es wurde ein Katheterschlauchmaterial geformt. Dieses wird nachstehend als Material 1 bezeichnet. Hierbei handelt es sich um ein nicht erfindungsgemäßes Kunststoffprodukt.

Teilreduziertes Silberorthophosphat wurde in ein Silikonkunststoffvorprodukt eingearbeitet. Das teilreduzierte Silberorthophosphat enthielt 67,3 Gew.% Ag⁺ und 10,4 Gew.% Ag⁰. Das Kunststoffprodukt enthielt 2 Gew.% des teilreduzierten Silberorthophosphats. Es wurde ein Katheterschlauchmaterial geformt. Dieses wird nachstehend als Material 2 bezeichnet. Es handelt sich um ein erfindungsgemäßes Kunststoffprodukt.

Material 3 ist nicht erfindungsgemäß und wird zu Vergleichszwecken herangezogen. Hierbei handelt es sich um ein Katheterschlauchmaterial, welches 20 Gew.% eines Additivs aus Bariumsulfat, 5 Gew.% Ag⁰ und 5 Gew.% Silberorthophosphat, bezogen auf das Additiv (5 Gew.% Ag⁰ und 3,85 Gew.% Ag⁺), enthielt. Bei der Herstellung des Additivs war das Bariumsulfat zunächst mit kolloidalem Silber behandelt und anschließend mit dem Silberorthophosphat vermischt worden.

Material 4 ist kein erfindungsgemäßes Material, sondern eine zu Vergleichszwecken herangezogene Nullprobe. Bei Material 4 handelt es sich um ein Katheterschlauchmaterial aus Silikon ohne jeden silberhaltigen Zusatz.

Die antimikrobielle Wirksamkeit dieser vier verschiedenen Katheterschlauchmaterialien ist in der nachfolgenden Tabelle 4 gezeigt.

**Tabelle 4: Antimikrobielle Wirksamkeit von Katheterschlauchmaterialien (Silikon) Startkeimzahl: 10⁷/ml E.coli**

| **Material** | **Bakterienwachstum nach** | | | | | | | |
|---|---|---|---|---|---|---|---|---|
| | 3 h | 5 h | 10 h | 15 h | 20 h | 25 h | 30 h | 35 h |
| 1 | 5+ | 1+ | 1+ | 0 | 0 | 0 | 0 | 0 |
| 2 | 5+ | 1+ | 1+ | (1+) | 0 | 0 | 0 | 0 |
| 3 | 5+ | 1+ | 0 | 0 | 0 | 0 | 0 | 0 |
| 4 | 5+ | 5+ | 4+ | 4+ | 4+ | 4+ | 4+ | 4+ |

Die Angaben in der Tabelle haben die folgende Bedeutung:
- 5+: Ausrollfläche überwachsen
- 4+: Ausrollfläche starkes Wachstum
- 3+: Ausrollfläche Wachstum
- 2+: Ausrollfläche schwaches Wachstum
- 1+: Ausrollfläche vereinzeltes Wachstum
- (1+): nur eine Kolonie
- 0: Ausrollfläche kein Wachstum

Das Material 1 ist ein nicht erfindungsgemäßes Kunststoffprodukt und das Material 2 ist ein erfindungsgemäßes Kunststoffprodukt. Bezogen auf das Katheterschlauchmaterial betrug der Silbergehalt 0,92 Gew.% in Material 1 und 1,55 Gew.% in Material 2.

Bei Material 3 handelt es sich um ein Vergleichsprodukt mit aktiviertem Nanosilber gemäß WO 2004/024205 mit einem Gesamtsilbergehalt von 1,77 Gew.%.

### Beispiel 8 - Teilreduktion mit Trinatriumcitrat-dihydrat

Silberorthophosphat gemäß Beispiel 1 wurde in einem Mörser zerstoßen, um eventuell beim Trocknen gebildete Agglomerate zu zerkleinern. 20 g dieses Ag₃PO₄ wurden in deionisiertem Wasser suspendiert, und die Suspension wurde auf 98°C erwärmt. Separat wurden 12,3 g Trinatriumcitrat-dihydrat in 60 ml deionisiertem Wasser warm gelöst, und die 98°C heiße Lösung wurde auf einmal der 98°C heißen Suspension zugesetzt. Der Ansatz wurde 60 Minuten bei 98°C gerührt. Nach ca. 10 Minuten trat die erste Verfärbung ein (ocker/braun). Mit zunehmender Reaktionszeit wurde der Feststoff dunkler. Nach dem Ablauf der 60 Minuten wurde die Heizung des Reaktionsgefäßes abgestellt, und es wurde weiter gerührt bis zur Abkühlung auf Raumtemperatur.

Der Feststoff wurde durch Zentrifugieren abgetrennt. Im Klarwasser wurden der pH-Wert und die elektrische Leitfähigkeit gemessen; pH = 7,9 und æ = 8,21 mS/cm. Der Feststoff wurde in 500 ml deionisiertem Wasser aufgenommen, gewaschen und wieder abgetrennt. Dieser Vorgang wurde dreimal wiederholt. Die elektrische Leitfähigkeit im letzten Waschwasser lag unterhalb 10 µS/cm, der pH-Wert betrug 8,0.

Der abgetrennte Feststoff wurde bei ca. 90°C im einem Umlufttrockenschrank mehrere Stunden getrocknet.
Chemische Analyse: Ag_{gesamt}: 77,1 %, Ag⁺: 72,8 %, Ag⁰: 4,3 %

### Beispiel 9 und Vergleichbeispiel 1 - Antimikrobiell ausgerüstete Kunststoffe gemäß Erfindung und gemäß Stand der Technik

Additiv 1: Nach dem Verfahren gemäß Beispiel 7 der WO 2004/024205 wurde Silber an Bariumsulfat adsorbiert und anschließend Silberphosphat in statu nascendi erzeugt. Das Produkt aus Beispiel 7 der WO 2004/024205 hatte die Zusammensetzung 91,4 Gew.% Bariumsulfat, 3,6 Gew.% Silber und 5 Gew.% Silberphosphat. Im vorliegenden Vergleichsbeispiel 1 wich die Zusammensetzung des Produkts leicht ab. In Vergleichsbeispiel 1 hatte Additiv 1 die Zusammensetzung 90 Gew.% Bariumsulfat, 5 Gew.% Silber und 5 Gew.% Silberorthophosphat.

Additiv 2: In dem erfindungsgemäßen Beispiel 9 wurde das durch Reduktion mit Trinatriumcitrat-dihydrat hergestellte teilreduzierte Silberorthophosphat gemäß Beispiel 8 verwendet. Es wurde als Additiv 2 eine Mischung aus 98 Gew.% Bariumsulfat und 2 Gew.% teilreduziertem Silberorthophosphat hergestellt.

Additiv 1 und Additiv 2 wurden in Silikonkautschuk eingearbeitet. Es wurde ein Silikonkautschuk verwendet, der im Handel unter der Bezeichnung MED 4065 von der Firma Nusil Technology, Irvine, Kalifornien, erhältlich ist. Die Mengen wurden so gewählt, dass ein Produkt hergestellt wurde, das aus 20 Gew.% Additiv 1 oder 2 und 80 Gew.% Silikonkautschuk bestand.

Für die Einarbeitung wurde ein Zweiwalzen-Walzenstuhl, v = 141 mm/s, Spaltweite: 2mm, Schlupf = 20 % bei Rautemperatur in je 30 Durchläufen gearbeitet. Das so erhaltene Material wurde zu Strängen mit 2,5 mm Durchmesser verpresst. Diese wurden bei 150°C 4 Stunden lang ausgehärtet und anschließend 24 Stunden lang im Exsikkator getrocknet.

Die dotierten Kunststoffe hatten die folgenden Zusammensetzungen:
Vergleichsbeispiel 1: 80 Gew.% MED 4065 und 20 Gew.% Additiv 1, d.h. 2 Gew.% Silber/Silberphosphat bezogen auf die dotierte Kunststoffzusammensetzung
Beispiel 9: 80 Gew.% MED 4065 und 20 Gew.% Additiv 2, d.h. 0.4 Gew.% teilreduziertes Silberphosphat bezogen auf die dotierte Kunststoffzusammensetzung

Von den so erhaltenen Strängen wurden jeweils 28 Stücke mit je 1 cm Länge in einem Probengefäß mit 5 ml Reinstwasser versetzt. Die 28 Stücke hatten zusammen eine Oberfläche von insgesamt 25 cm² (Oberfläche eines Stücks: r = 0,125 cm, h=1 cm 2nr²+2πrh = 0,884 cm²). Es ergab sich also ein Verhältnis von Gesamtoberfläche der Probenstücke zu Wasservolumen von 25cm²/5ml. Die Probengefäße wurden in einem Wärmeschrank bei 38°C inkubiert. Nach 1 Tag, 2 Tagen, sowie 4, 5, 6, 9, 10, 15 und 16 Tagen wurde das Wasser abgegossen und für die Analyse aufgefangen, und es wurden jeweils 5 ml Reinstwasser neu aufgegossen.

Das abgegossene Wasser wurde auf seinen Silbergehalt hin untersucht. Dazu wurde die induktiv gekoppelte Plasma-Massenspektrometrie verwendet.

Die Versuche wurden jeweils nach Erreichen eines Plateaus der Silberkonzentration abgebrochen.

Die folgende Tabelle 5 zeigt die jeweils gemessene Silberkonzentration in ng/cm²/d, d.h. die pro Tag freigesetzte Silbermenge (Silberkationen) in Nanogramm je Quadratzentimeter Oberfläche der Probenstücke.

**Tabelle 5**

| Tag | Silberfreisetzung (ng/cm²/d) | |
|---|---|---|
| | Vergleichsversuch 1 | Versuch 9 |
| 1 | 300 | 360 |
| 2 | 80 | 44 |
| 5 | 56 | 58 |
| 10 | 70 | 22 |
| 16 | | 24 |

Der erfindungsgemäße Kunststoff in Versuch 9 enthielt 0,4 Gew.% Wirkstoff (teilreduziertes Silberorthophosphat) während der Kunststoff gemäß Stand der Technik in Vergleichsbeispiel 1 einen Wirkstoffgehalt (Silber und Silberphosphat) von 2 Gew.% hatte. Der Vergleich zeigt, dass der erfindungsgmäße Kunststoff bei einem Fünftel der Wirkstoffkonzentration eine höhere Anfangsfreisetzung von Silberkationen lieferte. Der Abfall auf ein hinreichendes Plateau war dann schneller.

Der erfindungsgemäße Kunststoff weist damit Eigenschaften auf die insbesondere für den Einsatz in Medizinprodukten vorteilhaft sind. Eine hohe Anfangsfreisetzung ist im Bereich der Medizin erwünscht, damit z.B. die bei der Implantation mit eingebrachten Keime rasch abgetötet werden. Ein hinreichendes, aber niedriges Freisetzungsplateau ist insbesondere bei Dauerimplantaten vorteilhaft, da hier die Gesamtmenge freigesetzten Silbers während der Lebenszeit nicht zu hoch werden darf, um toxische Effekt zu vermeiden.

Es wurde überraschenderweise gefunden, dass durch das mit Citrat teilreduzierte Silberorthophosphat ein für Langzeitimplantate besonders günstiges Silberfreisetzungspotential erreicht wird. Weiterhin zeigt der Vergleich, dass sich erfindungsgemäß mit wesentlich geringerem Wirkstoffeinsatz eine für die antibakterielle Wirkung ausreichende Silberfreisetzung erzielen läßt, was insbesondere für Consumerprodukte bedeutend ist.

## Patentansprüche

1. Verfahren zur Herstellung eines antimikrobiell wirkenden Kunststoffproduktes, umfassend
(a) Bereitstellung einer Lösung eines Silbersalzes in wässrigem Ammoniak,
(b) Zugabe von Phosphorsäure unter Ausfällung von Silberorthophosphat als Feststoff, der in Suspension enthalten wird, bis der pH-Wert der Suspension zwischen 6,0 und 8,0 liegt,
(c) Abtrennen des Feststoffes, sowie
die folgenden Stufen gemäß Alternative 1
(d1) Suspendieren des Feststoffes in deionisiertem Wasser,
(e1) Zugabe von wässrigem Ammoniak zu der Suspension und Erwärmung der Mischung auf eine Temperatur im Bereich von 40-90°C, wobei die Menge an Ammoniak so bemessen ist, dass bei der gewählten Temperatur im Bereich von 40-90°C 1 Gew.% bis 80 Gew.% der Silberionen in Lösung gehen,
(f1) Zugabe eines Reduktionsmittels bei der gewählten Temperatur im Bereich von 40-90°C in einer Menge, die ausreicht, die in Lösung befindlichen Silberionen zu metallischem Silber zu reduzieren, so dass ein teilreduziertes Silberorthophosphat als suspendierter Feststoff gebildet wird,
(g1) Abtrennen des Feststoffes,
(h1) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist, oder
die folgenden Stufen gemäß Alternative 2
(d2) Suspendieren des Feststoffes in deionisiertem Wasser,
(e2) Zugabe eines Reduktionsmittels bei der gewählten Temperatur im Bereich von 40-90°C in einer Menge, die ausreicht, 1 Gew.% bis 65 Gew.% des in der Suspension des Feststoffs enthaltenen Silberorthophosphats zu metallischem Silber zu reduzieren, so dass ein teilreduziertes Silberorthophosphat als Feststoff gebildet wird,
(f2) Abtrennen des Feststoffes,
(g2) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist, oder
die folgenden Stufen gemäß Alternative 3 (d3
) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 50 µS/cm aufweist,
(e3) Suspendieren des Feststoffes in deionisiertem Wasser,
(f3) Zugabe von wässrigem Ammoniak zur Suspension und Erwärmung der Mischung auf eine Temperatur im Bereich von 40-90°C, wobei die Menge an Ammoniak so bemessen ist, dass bei der gewählten Temperatur im Bereich von 40-90°C 1 Gew.% bis 80 Gew.% der Silberionen in Lösung gehen,
(g3) Zugabe eines Reduktionsmittels bei der gewählten Temperatur im Bereich von 40-90°C in einer Menge, die ausreicht, die in Lösung befindlichen Silberionen zu metallischem Silber zu reduzieren, so dass ein teilreduziertes Silberorthophosphat als Feststoff gebildet wird,
(h3) Abtrennen des Feststoffes,
(i3) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist, oder
die folgenden Stufen gemäß Alternative 4 (d4
) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 50 µS/cm aufweist,
(e4) Suspendieren des Feststoffes in deionisiertem Wasser,
(f4) Zugabe eines Reduktionsmittels bei der gewählten Temperatur im Bereich von 40-90°C in einer Menge, die ausreicht, 1 Gew.% bis 65 Gew.% des in der Suspension des Feststoffs enthaltenen Silberorthophosphats zu metallischem Silber zu reduzieren, so dass ein teilreduziertes Silberorthophosphat als Feststoff gebildet wird,
(g4) Abtrennen des Feststoffes,
(h4) wiederholtes Waschen des Feststoffes mit Portionen von deionisiertem Wasser, bis die spezifische Leitfähigkeit bei 25°C der letzten Portion Waschwasser nach Abtrennung von dem Feststoff einen Wert unter 20 µS/cm aufweist, oder
die folgenden Stufen gemäß Alternative 5 (d5
) mehrfaches Waschen des abgetrennten Feststoffes mit Portionen von deionisiertem Wasser, bis die spezifische Leitfähigkeit bei 25°C der letzten Portion Waschwasser nach Abtrennung von dem Feststoff einen Wert unter 50 µS/cm, vorzugsweise unter 20 µS/cm aufweist,
(e5) Trocknen des Feststoffs,
(f5) gegebenenfalls Zerkleinern des getrockneten Feststoffs,
(g5) Suspendieren des Feststoffs in deionisiertem Wasser und Erwärmen der Suspension auf eine Temperatur im Bereich von 70°C bis 100°C,
(h5) Auflösen von Citrat, vorzugsweise Trinatriumcitrat in deionisiertem Wasser und Erwärmen der wässrigen Lösung auf eine Temperatur im Bereich von 70°C bis 100°C, wobei die Menge an Citrat so bemessen ist, dass sie ausreicht, um zwischen 1 Gew.% und 65 Gew.% des in der Suspension des zerkleinerten Feststoffs enthaltenen Silberorthophosphats zu metallischem Silber zu reduzieren,
(i5) Zugabe der wässrigen Citratlösung in einer Portion zu der Suspension und Rühren der Suspension bei einer Temperatur im Bereich von 70°C bis 100°C unter Bildung eines teilreduzierten Silberorthophosphats als Feststoff, wobei die Temperatur durch Wärmezufuhr in dem genannten Bereich gehalten wird,
(k5) Beendigung der Wärmezufuhr und Weiterrühren der Suspension, bis sich diese auf Raumtemperatur abgekühlt hat,
(15) Abtrennen des Feststoffs,
(m5) wiederholtes Waschen des Feststoffs mit Portionen von deionisiertem Wasser, bis die spezifische Leitfähigkeit bei 25°C der letzten Portion Waschwasser nach Abtrennung von dem Feststoff einen Wert unter 20 µS/cm aufweist, und
die weiteren Stufen
(n) Trocknen des Feststoffes,
(o) Einarbeiten des Feststoffes in ein Kunststoffvorprodukt, welches nicht mit einem kolloiden Metall behandelt worden ist oder ein solches enthält, und
(p) Formung des Kunststoffproduktes,

2. Verfahren gemäß den Alternativen 1 bis 4 von Anspruch 1, **dadurch gekennzeichnet, dass** das Reduktionsmittel aus Zuckern, insbesondere Glucose, Aldehyden, Hydrochinon, Weinsäure, Salzen der Zitronensäure und Hydrazin ausgewählt ist.

3. Verfahren gemäß den Alternativen 1 bis 4 von Anspruch 1 oder gemäß Anspruch 2, **dadurch gekennzeichnet, dass** der Suspension des teilreduzierten Silberorthophosphats vor dem Abtrennen der Feststoffe Phosphorsäure zugesetzt wird, um einen pH-Wert im Bereich von 6,0 bis 8,0 einzustellen.

4. Verfahren gemäß Alternative 5 von Anspruch 1, **dadurch gekennzeichnet, dass** die Suspension in Stufe (i5) 20 Minuten bis 3 Stunden bei einer Temperatur von 70°C bis 100°C unter Bildung des teilreduzierten Silberphosphats gerührt wird.

5. Verfahren gemäß Alternative 5 von Anspruch 1 oder gemäß Anspruch 4, **dadurch gekennzeichnet, dass** die Temperatur in den Stufen (g5), (h5) und (i5) 90°C bis 100°C beträgt.

6. Verfahren nach einem der vorhergehenden Ansprüche, **dadurch gekennzeichnet, dass** ausschließlich Reinstwasser verwendet wird.

7. Verfahren nach einem der vorhergehenden Ansprüche, **dadurch gekennzeichnet, dass** der Feststoff durch Zentrifugieren abgetrennt wird.

8. Verfahren nach Anspruch 7, **dadurch gekennzeichnet, dass** der Feststoff zum Waschen in Reinstwasser dispergiert und anschließend durch Zentrifugieren abgetrennt wird.

9. Verfahren nach einem der vorhergehenden Ansprüche, **dadurch gekennzeichnet, dass** der getrocknete Feststoff in einer Menge von 0,1 Gew.% bis 10 Gew.%, vorzugsweise 0,5 Gew.% bis 5 Gew.% und insbesondere 1 Gew.% bis 3 Gew.%, bezogen auf das Gesamtgewicht des Kunststoffproduktes, in das Kunststoffvorprodukt eingearbeitet wird.

10. Verfahren nach einem der vorhergehenden Ansprüche, **dadurch gekennzeichnet, dass** das Kunststoffvorprodukt Polyurethan, Polycarbonat, Silicon, Polyvinylchlorid, Polyacrylat, Polyester, Polyolefin, Polystyrol oder Polyamid umfasst.

11. Verfahren nach einem der vorhergehenden Ansprüche, **dadurch gekennzeichnet, dass** der Feststoff nach dem Trocknen in das Kunststoffvorprodukt eingearbeitet wird, ohne zuvor auf ein anorganisches Trägermaterial oder einen anorganischen Füllstoff aufgebracht oder mit einem solchen vermischt worden zu sein.

12. Verfahren nach einem der vorhergehenden Ansprüche, **dadurch gekennzeichnet, dass** der Feststoff nach dem Trocknen zunächst mit einem anorganischen Füllstoff vermischt wird, und die Mischung in das Kunststoffprodukt eingearbeitet wird.

13. Verfahren nach einem der vorhergehenden Ansprüche, **dadurch gekennzeichnet, dass** zusätzlich mindestens ein weiteres in Wasser schwer lösliches Material, das aus Zirkoniumdioxid, Zirkoniumsilikat, Titandioxid, Zinkoxid, Calciumfluorid, Calciumcarbonat, Alumosilikaten, Hydroxylapatit, Fluorapatit, Bariumsulfat, Calciumsulfat und Kohlenstoff in seinen verschiedenen Erscheinungsformen ausgewählt ist, in das Kunststoffvorprodukt eingearbeitet wird.

14. Verfahren nach Anspruch 12, **dadurch gekennzeichnet, dass** der Füllstoff aus den in Wasser schwer löslichen Materialien gemäß Anspruch 13 ausgewählt ist.

15. Verfahren nach einem der vorhergehenden Ansprüche, **dadurch gekennzeichnet, dass** das Kunststoffvorprodukt nach Einarbeiten des Feststoffes zu einem medizinischen Katheter geformt wird.

16. Verfahren nach einem der Ansprüche 1 bis 14, **dadurch gekennzeichnet, dass** das Kunststoffvorprodukt als Überzug auf einen Träger aus anderem Material aufgebracht wird.

17. Verfahren nach einem der vorhergehenden Ansprüche, **dadurch gekennzeichnet, dass** der Feststoff nicht auf ein anorganisches Trägermaterial aufgebracht wird.

18. Verfahren nach Anspruch 17, **dadurch gekennzeichnet, dass** der Feststoff nicht auf ein Oxid des Titans, Magnesiums, Aluminiums, Siliziums, Cers, Zirconiums, Hafniums, Niobs oder Tantals oder auf Calciumhydroxylapatit oder Bariumsulfat oder auf eine Mischung derselben aufgebracht wird.

19. Verfahren nach Anspruch 18, **dadurch gekennzeichnet, dass** der Feststoff nicht auf Titandioxid aufgebracht wird.

20. Kunststoffprodukt, erhältlich nach dem Verfahren gemäß einem der vorhergehenden Ansprüche.

21. Kunststoffprodukt nach Anspruch 20, **dadurch gekennzeichnet, dass** es aus antimikrobiell wirkendem Kunststoff besteht, der nach einem der Ansprüche 1 bis 14 erhältlich ist.

22. Kunststoffprodukt nach Anspruch 20, **dadurch gekennzeichnet, dass** mindestens ein Teil desselben aus antimikrobiell wirkendem Kunststoff besteht, der nach dem Verfahren gemäß einem der Ansprüche 1 bis 14 erhältlich ist, und mindestens ein weiterer Teil desselben aus einem anderen Material besteht.

23. Kunststoffprodukt nach Anspruch 22, **dadurch gekennzeichnet, dass** das andere Material aus Metallen, Glas, Keramik und Kunststoffen ausgewählt ist.

24. Kunststoffprodukt nach Anspruch 22 oder 23, **dadurch gekennzeichnet, dass** seine Oberfläche mindestens teilweise aus dem antimikrobiell wirkenden Kunststoff und mindestens teilweise aus anderem Material besteht.

25. Kunststoffprodukt nach Anspruch 22 oder 23, **dadurch gekennzeichnet, dass** der antimikrobiell wirkende Kunststoff das andere Material umschließt, so dass die Oberfläche des Produktes ausschließlich aus dem antimikrobiell wirkenden Kunststoff besteht.

26. Kunststoffprodukt nach Anspruch 20, welches ein Katheter ist.

27. Kunststoffprodukt nach einem der Ansprüche 20 bis 26, **dadurch gekennzeichnet, dass** es frei von einem anorganischen Trägermaterial für den Feststoff ist.

28. Kunststoffprodukt nach Anspruch 27, **dadurch gekennzeichnet, dass** es ein Oxid des Titans, Magnesiums, Aluminiums, Siliziums, Cers, Zirconiums, Hafniums, Niobs oder Tantals oder Calciumhydroxylapatit oder Bariumsulfat nicht als Trägermaterial für den Feststoff enthält.

29. Kunststoffprodukt nach Anspruch 28, **dadurch gekennzeichnet, dass** es Titandioxid nicht als Trägermaterial für den Feststoff enthält.

30. Kunststoffprodukt, **dadurch gekennzeichnet, dass** es Kunststoff und darin verteiltes teilreduziertes Silberorthophosphat enthält, welches aus Silberorthophosphatteilchen besteht, die teilweise zu metallischem Silber reduziert worden sind, so dass in den Teilchen ein direkter Kontakt zwischen Silberorthophosphat und metallischem Silber vorliegt und die Oberfläche der Teilchen teilweise aus Silberphosphat und teilweise aus metallischem Silber besteht.

31. Kunststoffvorprodukt, **dadurch gekennzeichnet, dass** es Kunststoff und darin verteiltes teilreduziertes Silberorthophosphat enthält, welches aus Silberorthophosphatteilchen besteht, die teilweise zu metallischem Silber reduziert worden sind, so dass in den Teilchen ein direkter Kontakt zwischen Silberorthophosphat und metallischem Silber vorliegt und die Oberfläche der Teilchen teilweise aus Silberphosphat und teilweise aus metallischem Silber besteht.

32. Kunststoffprodukt gemäß Anspruch 30 oder Kunststoffvorprodukt gemäß Anspruch 31, **dadurch gekennzeichnet, dass** das teilreduzierte Silberorthophosphat ein Verhältnis von Silberionen des Silberorthophosphats zu Silberatomen des metallischen Silbers im Bereich von 95:5 bis 55:45 aufweist.

33. Kunststoffprodukt oder Kunststoffvorprodukt gemäß einem der Ansprüche 30 bis 32, **dadurch gekennzeichnet, dass** die Teilchen gemäß Messung durch Laserbeugung eine solche Teilchengröße aufweisen, dass 95 Gew.%, vorzugsweise 98 Gew.% und insbesondere 99 Gew.% der Teilchen eine Größe im Bereich von 0,5 bis 50 µm haben.

34. Kunststoffprodukt oder Kunststoffvorprodukt gemäß Anspruch 33, **dadurch gekennzeichnet, dass** die Teilchengrößenverteilung ein Maximum aufweist und das Maximum im Bereich von 2 bis 20 µm, vorzugsweise im Bereich von 3 bis 12 µm und insbesondere im Bereich von 4 bis 10 µm liegt.

35. Kunststoffprodukt oder Kunststoffvorprodukt gemäß einem der Ansprüche 30 bis 34, **dadurch gekennzeichnet, dass** der Kunststoff Polyurethan, Polycarbonat, Silicon, Polyvinylchlorid, Polyacrylat, Polyester, Polyolefin, Polystyrol oder Polyamid umfasst.

36. Kunststoffprodukt gemäß einem der Ansprüche 30 und 32 bis 35, **dadurch gekennzeichnet, dass** es aus Kunststoff besteht, in dem das teilreduzierte Silberorthophosphat verteilt ist.

37. Kunststoffprodukt gemäß einem der Ansprüche 30 und 32 bis 35, **dadurch gekennzeichnet, dass** mindestens ein Teil desselben aus Kunststoff besteht, in dem das teilreduzierte Silberorthophosphat verteilt ist, und mindestens ein anderer Teil desselben aus einem anderen Material besteht.

38. Kunststoffprodukt nach Anspruch 37, **dadurch gekennzeichnet, dass** das andere Material aus Metallen, Glas, Keramik und Kunststoffen ausgewählt ist.

39. Kunststoffprodukt nach Anspruch 37 oder 38, **dadurch gekennzeichnet, dass** seine Oberfläche mindestens teilweise aus Kunststoff, in dem das teilreduzierte Silberorthophosphat verteilt ist, und mindestens teilweise aus anderem Material besteht.

40. Kunststoffprodukt nach Anspruch 37 oder 38, **dadurch gekennzeichnet, dass** der Kunststoff, in dem das teilreduzierte Silberorthophosphat verteilt ist, das andere Material umschließt, so dass die Oberfläche des Produktes ausschließlich aus diesem Kunststoff besteht.

41. Kunststoffprodukt nach einem der Ansprüche 30 und 32 bis 40, welches ein Katheter ist.

## Claims

1. A method of producing an antimicrobial plastics product including
(a) providing a solution of a silver salt in aqueous ammonia,
(b) adding phosphoric acid with the precipitation of silver orthophosphate in solid form, which is contained in suspension, until the pH value of the suspension lies between 6.0 and 8.0,
(c) separating the solid material, and
the following steps in accordance with alternative 1
(d1) suspending the solid material in deionised water,
(e1) adding aqueous ammonia to the suspension and heating the mixture to a temperature in the range of 40-90°C, wherein the amount of ammonia is so dimensioned that, at the selected temperature in the range of 40-90°C, 1% by wt. to 80% by wt. of the silver ions go into solution,
(f1) adding a reducing agent at the selected temperature in the range of 40-90°C in an amount which is sufficient to reduce the silver ions in solution to metallic silver so that a partially reduced silver orthophosphate is formed in the form of suspended solid material,
(g1) separating the solid material,
(h1) repeatedly washing the solid material with portions of deionised water until the specific conductivity at 25°C of the last portion of washing water after separation of the solid material has a value below 20µS/cm, or
the following steps in accordance with alternative 2
(d2) suspending the solid material in deionised water,
(e2) adding a reducing agent at the selected temperature in the range of 40-90°C in an amount which is sufficient to reduce 1% by wt. to 65% by wt. of the silver orthophosphate contained in the suspension of the solid material to metallic silver so that a partially reduced silver orthophosphate is formed in the form of solid material,
(f2) separating the solid material,
(g2) repeatedly washing the solid material with portions of deionised water until the specific conductivity at 25 °C of the last portion of washing water after separation of the solid material has a value below 20µS/cm, or
the following steps in accordance with alternative 3
(d3) repeatedly washing the solid material with portions of deionised water until the specific conductivity at 25°C of the last portion of washing water after separation of the solid material has a value below 50µS/cm,
(e3) suspending the solid material in deionised water,
(f3) adding aqueous ammonia to the suspension and heating the mixture to a temperature in the range of 40-90°C, wherein the amount of ammonia is so dimensioned that at the selected temperature in the range of 40-90°C 1% by wt. to 80% wt. of the silver ions go into solution,
(g3) adding a reducing agent at the selected temperature in the range 40-90°C in an amount which is sufficient to reduce the silver ions in solution to metallic silver so that a partially reduced silver orthophosphate is formed in the form of solid material,
(h3) separating the solid material,
(i3) repeatedly washing the solid material with portions of deionised water until the specific conductivity at 25°C of the last portion of washing water after separation of the solid material has a value below 20µS/cm, or
the following steps in accordance with alternative 4
(d4) repeatedly washing the solid material with portions of deionised water until the specific conductivity at 25°C of the last portion of washing water after separation of the solid material has a value below 50µS/cm
(e4) suspending the solid material in deionised water,
(f4) adding a reducing agent at the selected temperature in the range of 40-90°C in an amount which is sufficient to reduce 1% by wt. to 65% by wt. of the silver orthophosphate contained in the suspension of the solid material to metallic silver so that a partially reduced silver orthophosphate in the form of solid material,
(g4) separating the solid material,
(h4) repeatedly washing the solid material with portions of deionised water until the specific conductivity at 25°C of the last portion of washing water after separation of the solid material has a value below 20µS/cm, or
the following steps in accordance with alternative 5
(d5) repeatedly washing the separated solid material with portions of deionised water until the specific conductivity at 25°C of the last portion of washing water after separation of the solid material has a value below 50µS/cm, preferably below 20µS/cm,
(e5) drying the solid material,
(f5) optionally comminuting the dried solid material,
(g5) duspending the solid material in deionised water and heating the suspension to a temperature in the range of 70°C to 100°C,
(h5) dissolving citrate, preferably trisodium citrate, in deionised water and heating the aqueous solution to a temperature in the range of 70°C to 100°C, whereby the amount of citrate is so dimensioned that it is sufficient to reduce between 1% by wt. and 65% by wt. of the silver orthophosphate contained in the suspension of the comminuted solid material to metallic silver,
(i5) adding the aqueous citrate solution in one portion to the suspension and stirring the suspension at a temperature in the range of 70°C to 100°C whilst forming a partially reduced silver orthophosphate in the form of solid material, wherein the temperature is maintained in the said range by the addition of heat, (k5) stopping the addition of heat and further stirring of the suspension until it has cooled to room temperature.
(l5) separating the solid material,
(m5) repeatedly washing the solid material with portions of deionised water until the specific conductivity at 25°C of the last portion of washing water after separating the solid material has a value below 20µ/cm, and
the further steps of
(n) drying the solid material,
(o) incorporating the solid material into a plastics pre-product, which has not been treated with a colloidal metal or does not contain one, and
(p) forming the plastics product.

2. A method in accordance with alternatives 1 to 4 in claim 1, **characterised in that** the reducing agent is selected from sugars, particularly glucose, aldehydes, hydroquinone, tartaric acid, salts of citric acid and hydrazine.

3. A method in accordance with alternatives 1 to 4 of claim 1 or in accordance with claim 2, **characterised in that** before the separation of the solid materials phosphoric acid is added to the suspension of the partially reduced silver orthophosphate in order to set a pH value in the range of 6.0 to 8.0.

4. A method in accordance with alternative 5 of claim 1, **characterised in that** the suspension in step (i5) is stirred for 20 minutes to 3 hours at a temperature of 70°C to 100°C whilst forming the partially reduced silver phosphate.

5. A method in accordance with alternative 5 of claim 1 or in accordance with claim 4, **characterised in that** the temperature in the steps (g5), (h5) and (i5) is 90°C to 100 °C.

6. A method as claimed in one of the preceding claims, **characterised in that** only ultrapure water is used.

7. A method as claimed in one of the preceding claims, **characterised in that** the solid material is separated by centrifugation.

8. A method as claimed in claim 7, **characterised in that** the solid material is dispersed for the washing in ultrapure water and is subsequently separated by centrifugation.

9. A method as claimed in one of the preceding claims, **characterised in that** the dried solid material is incorporated into the plastics pre-product in an amount of 0.1 % by wt. to 10% by wt., preferably 0.5% by wt. to 5% by wt. and particularly 1% by wt. to 3% by wt. with respect to the total weight of the plastics product.

10. A method as claimed in one of the preceding claims, **characterised in that** the plastics pre-product includes polyurethane, polycarbonate, silicone, polyvinyl chloride, polyacrylate, polyester, polyolefin, polystyrol or polyamide.

11. A method as claimed in one of the preceding claims, **characterised in that** the solid material is incorporated after the drying into the plastics pre-product without having previously been applied to an inorganic carrier material or an inorganic filler or being mixed therewith.

12. A method as claimed in one of the preceding claims, **characterised in that** the solid material is initially mixed after the drying with an inorganic filler and the mixture is incorporated into the plastics product.

13. A method as claimed in one of the preceding claims, **characterised in that** additionally at least one further material which is of low solubility in water is incorporated into the plastics pre-product, which is selected from zirconium dioxide, zirconium silicate, titanium dioxide, zine oxide, calcium fluoride, calcium carbonate, aluminosilicates, hydroxylapatite, fluorapatite, barium sulphate, calcium sulphate and carbon in its different manifestations.

14. A method as claimed in claim 12, **characterised in that** the filler is selected from the materials of low solubility in water in accordance with claim 13.

15. A method as claimed in one of the preceding claims, **characterised in that** the plastics pre-product is formed into a medicinal catheter after incorporation of the solid material.

16. A method as claimed in one of claims 1 to 14, **characterised in that** the plastics pre-product is applied as a coating to a carrier of another material.

17. A method as claimed in one of the preceding claims, **characterised in that** the solid material is not applied to an inorganic carrier material.

18. A method as claimed in claim 17, **characterised in that** the solid material is not applied to an oxide of titanium, magnesium, aluminium, silicon, cerium, zirconium, hafnium, niobium or tantalum or to calcium hydroxylapatite or barium sulphate or to a mixture of the same.

19. A method as claimed in claim 18, **characterised in that** the solid material is not applied to titanium dioxide.

20. A plastics product obtainable by the method in accordance with one of the preceding claims.

21. A plastics product as claimed in claim 20, **characterised in that** it consists of antimicrobial plastics material, which is obtainable in accordance with one of claims 1 to 14.

22. A plastics product as claimed in claim 20, **characterised in that** at least a portion of the same consists of antimicrobial plastics material, which is obtainable by the method in accordance with one of claims 1 to 14, and at least a further portion of the same consists of another material.

23. A plastics product as claimed in claim 22, **characterised in that** the other material is selected from metals, glass, ceramic and plastic materials.

24. A plastics product as claimed in claim 22 or 23, **characterised in that** its surface consists at least partially of the antimicrobial plastic material and at least partially of another material.

25. A plastics product as claimed in claim 22 or 23, **characterised in that** the antimicrobial plastic material surrounds the other material so that the surface of the product consists exclusively of the antimicrobial plastic material.

26. A plastics product as claimed in claim 20 which is a catheter.

27. A plastics product as claimed in one of claims 20 to 26, **characterised in that** it is free of an inorganic carrier material for the solid material.

28. A plastics product as claimed in claim 27, **characterised in that** it does not contain an oxide of titanium, magnesium, aluminium, silicon, cerium, zirconium, hafnium, niobium, or tantalum or calcium hydroxylapatite or barium sulphate as carrier material for the solid material.

29. A plastics product as claimed in claim 28, **characterised in that** it does not contain titanium dioxide as carrier material for the solid material.

30. A plastics product, **characterised in that** it contains plastics material and partially reduced silver orthophosphate distributed therein, which consists of silver orthophosphate particles, which have been partially reduced to metallic silver so that there is direct contact between silver orthophosphate and metallic silver in the particles and the surface of the particles consist partially of silver phosphate and partially of metallic silver.

31. A plastics pre-product **characterised in that** it contains plastics material and partially reduced silver orthophosphate distributed therein, which consists of silver orthophosphate particles, which have been partially reduced to metallic silver, so that there is direct contact between silver orthophosphate and metallic silver in the particles and the surface of the particles consists partially of silver phosphate and partially of metallic silver.

32. A plastic product in accordance with claim 30 or a plastics pre-product in accordance with claim 31 **characterised in that** the partially reduced silver orthophosphate has a ratio of silver ions of the silver orthophosphate to silver atoms of the metallic silver in the range of 95:5 to 55:45.

33. A plastics product or plastics pre-product in accordance with one of claims 30 to 32, **characterised in that** the particles have such a particle size, as measured by laser diffraction, that 95% by wt., preferably 98% by wt. and particularly 99% by wt. of the particles have a size in the region of 0.5 to 50 µm.

34. A plastics product or plastics pre-product in accordance with claim 33, **characterised in that** the particle size distribution has a maximum and the maximum lies in the range of 2 to 20 µm, preferably in the range of 3 to 12 µm and particularly in the range of 4 to 10 µm.

35. A plastics product or plastics pre-product in accordance with one of claims 30 to 34, **characterised in that** the plastic material includes polyurethane, polycarbonate, silicon, polyvinylchloride, polyacrylate, polyester, polyolefin, polystyrol or polyamide.

36. A plastics product in accordance with one of claims 30 and 32 to 35, **characterised in that** it consists of plastic material, in which the partially reduced silver orthophosphate is distributed.

37. A plastics product in accordance with one of claims 30 and 32 to 35, **characterised in that** at least a proportion of it consists of plastics material, in which the partially reduced silver orthophosphate is distributed, and at least another portion of it consists of another material.

38. A plastics product as claimed in claim 37, **characterised in that** the other material is selected from metals, glass, ceramic and plastics materials.

39. A plastics product as claimed in claim 37 or 38, **characterised in that** its surface consists at least partially of plastics material, in which the partially reduced silver orthophosphate is distributed, and at least partially of another material.

40. A plastics product as claimed in claim 37 or 38, **characterised in that** the plastics material, in which the partially reduced silver orthophosphate is distributed, surrounds the other material so that the surface of the product consists exclusively of this plastics material.

41. A plastics product as claimed in one of claims 30 and 32 to 40 which is a catheter.

## Revendications

1. Procédé de fabrication d'un produit en matière plastique à effet antimicrobien, comprenant :
(a) la mise à disposition d'une solution d'un sel d'argent dans de l'ammoniaque,
(b) l'addition d'acide phosphorique avec précipitation d'orthophosphate d'argent sous forme d'une matière solide, qui est contenu dans la suspension, jusqu'à ce que le pH de la suspension soit compris entre 6,0 et 8,0,
(c) séparation de la matière solide, ainsi que l
es étapes suivantes, selon l'alternative 1
(d1) mise en suspension de la matière solide dans de l'eau déionisée,
(e1) addition d'ammoniaque aqueuse à la suspension et chauffage du mélange à une température comprise dans la plage allant de 40-90°C, la quantité d'ammoniac étant mesurée de telle façon que, à la température sélectionnée, comprise dans la plage allant de 40-90°C, 1 % en poids à 80 % en poids des ions argent passent en solution,
(f1) addition d'un réducteur à la température sélectionnée comprise dans la plage allant de 40-90°C, en une quantité suffisante pour réduire les ions argent se trouvant en solution en argent métallique, de façon qu'un orthophosphate d'argent partiellement réduit se forme sous forme d'une matière solide en suspension,
(g1) séparation de la matière solide,
(h1) lavage répété de la matière solide avec des portions d'eau déionisée, jusqu'à ce que la conductivité spécifique à 25°C de la dernière portion d'eau de lavage, après séparation d'avec la matière solide, présente une valeur inférieure à 20 µS/cm, ou
les étapes suivantes selon l'alternative 2
(d2) mise en suspension de la matière solide dans de l'eau déionisée,
(e2) addition d'un réducteur à la température sélectionnée comprise dans la plage allant de 40 à 90°C, en une quantité suffisante pour réduire 1 % en poids à 65 % en poids de l'orthophosphate d'argent contenu dans la suspension de la matière solide en argent métallique de façon qu'un orthophosphate d'argent partiellement réduit se forme sous forme d'une matière solide,
(f2) séparation de la matière solide,
(g2) lavage répété de la matière solide avec des portions d'eau déionisée, jusqu'à ce que la conductivité spécifique à 25°C de la dernière portion d'eau de lavage, après séparation d'avec la matière solide, présente une valeur inférieure à 20 µS/cm, ou
les étapes suivantes selon l'alternative 3
(d3) lavage répété de la matière solide avec des portions d'eau déionisée jusqu'à ce que la conductivité spécifique à 25°C de la dernière portion d'eau de lavage, après séparation d'avec la matière solide, présente une valeur inférieure à 50 µS/cm,
(e3) mise en suspension de la matière solide dans de l'eau déionisée,
(f3) addition d'ammoniaque aqueuse à la suspension et chauffage du mélange à une température comprise dans la plage allant de 40-90°C, la quantité d'ammoniac étant mesurée de telle façon que, à la température sélectionnée comprise dans la plage allant de 40 à 90°C, 1 % en poids à 80 % en poids des ions argent passent en solution,
(g3) addition d'un réducteur à la température sélectionnée comprise dans la plage allant de 40 à 90°C, en une quantité suffisante pour réduire les ions argent se trouvant en solution en argent métallique, de façon qu'un orthophosphate d'argent partiellement réduit se forme sous forme d'une matière solide,
(h3) séparation de la matière solide,
(i3) lavage répété de la matière solide avec des portions d'eau déionisée jusqu'à ce que la conductivité spécifique à 25°C de la dernière portion d'eau de lavage, après séparation d'avec la matière solide, présente une valeur inférieure à 20 µS/cm, ou
les étapes suivantes selon l'alternative 4
(d4) lavage répété de la matière solide avec des portions d'eau déionisée, jusqu'à ce que la conductivité spécifique à 25°C de la dernière portion d'eau de lavage, après séparation d'avec la matière solide, présente une valeur inférieure à 50 µS/cm,
(e4) mise en suspension de la matière solide dans de l'eau déionisée,
(f4) addition d'un réducteur à la température sélectionnée comprise dans la plage allant de 40 à 90°C, en une quantité suffisante pour réduire 1 % en poids à 65 % en poids de l'orthophosphate d'argent contenu dans la suspension de la matière solide en argent métallique, de façon qu'un orthophosphate d'argent partiellement réduit se forme sous forme d'une matière solide,
(g4) séparation de la matière solide,
(h4) lavage répété de la matière solide avec des portions d'eau déionisée, jusqu'à ce que la conductivité spécifique à 25°C de la dernière portion d'eau de lavage, après séparation d'avec la matière solide, présente une valeur inférieure à 20 µS/cm, ou
les étapes suivantes selon l'alternative 5
(d5) lavage multiple de la matière solide séparée avec des portions d'eau déionisée, jusqu'à ce que la conductivité spécifique à 25°C de la dernière portion d'eau de lavage, après séparation d'avec la matière solide, présente une valeur inférieure à 50 µS/cm, de préférence inférieure à 20 µS/cm,
(e5) séchage de la matière solide,
(f5) éventuellement, broyage de la matière solide séchée,
(g5) mise en suspension de la matière solide dans de l'eau déionisée, et chauffage de la suspension à une température comprise dans la plage allant de 70 à 100°C,
(h5) dissolution d'un citrate, de préférence le citrate trisodique, dans de l'eau déionisée, et chauffage de la solution aqueuse à une température comprise dans la plage allant de 70 à 100°C, la quantité de citrate étant mesurée de telle façon qu'elle suffise pour réduire entre 1 % en poids et 65 % en poids de l'orthophosphate d'argent contenu dans la suspension de la matière solide broyée en argent métallique,
(i5) addition de la solution aqueuse de citrate en une portion à la suspension et agitation de la suspension à une température comprise dans la plage allant de 70 à 100°C avec formation d'un orthophosphate d'argent partiellement réduit sous forme d'une matière solide, la température étant maintenue dans la plage mentionnée par un apport de chaleur,
(k5) terminaison de l'apport de chaleur et poursuite de l'agitation de la suspension jusqu'à ce que cette dernière soit refroidie à la température ambiante,
(15) séparation de la matière solide,
(m5) lavage répété de la matière solide avec des portions d'eau déionisée, jusqu'à ce que la conductivité spécifique à 25°C de la dernière portion d'eau de lavage, après séparation d'avec la matière solide, présente une valeur inférieure à 20 µS/cm, et
les étapes supplémentaires
(n) séchage de la matière solide,
(o) incorporation de la matière solide dans un précurseur de matériau plastique, qui n'a pas été traité par un métal colloïdal ou qui n'en contient pas, et
(p) moulage du produit en matière plastique.

2. Procédé selon les alternatives 1 à 4 de la revendication 1, **caractérisé en ce que** le réducteur est choisi parmi les sucres, en particulier le glucose, les aldéhydes, l'hydroquinone, l'acide tartrique, les sels de l'acide citrique et l'hydrazine.

3. Procédé selon les alternatives 1 à 4 de la revendication 1 ou selon la revendication 2, **caractérisé en ce que** la suspension de l'orthophosphate d'argent partiellement réduit est, avant la séparation de la matière solide, additionnée d'acide phosphorique, pour ajuster le pH à une valeur comprise dans la plage allant de 6,0 à 8,0.

4. Procédé selon l'alternative 5 de la revendication 1, **caractérisé en ce que** la suspension est, dans l'étape (i5), agitée pendant 20 minutes à 3 heures à une température de 70 à 100°C avec formation du phosphate d'argent partiellement réduit.

5. Procédé selon l'alternative 5 de la revendication 1 ou selon la revendication 4, **caractérisé en ce que** la température, dans les étapes (g5), (h5) et (i5), est de 90 à 100°C.

6. Procédé selon l'une des revendications précédentes, **caractérisé en ce qu'**on utilise exclusivement de l'eau de très haute pureté.

7. Procédé selon l'une des revendications précédentes, **caractérisé en ce que** la matière solide est séparée par centrifugation.

8. Procédé selon la revendication 7, **caractérisé en ce que** la matière solide est, pour le lavage, dispersée dans de l'eau de haute pureté, puis est séparée par centrifugation.

9. Procédé selon l'une des revendications précédentes, **caractérisé en ce que** la matière solide séchée est incorporée dans le précurseur de matériau plastique en une quantité de 0,1 à 10 % en poids, de préférence de 0,5 à 5 % en poids et en particulier de 1 à 3 % en poids par rapport au poids total du produit en matière plastique.

10. Procédé selon l'une des revendications précédentes, **caractérisé en ce que** le précurseur de matériau plastique comprend du polyuréthanne, du polycarbonate, de la silicone, du poly(chlorure de vinyle), du polyacrylate, du polyester, de la polyoléfine, du polystyrène ou du polyamide.

11. Procédé selon l'une des revendications précédentes, **caractérisé en ce que** la matière solide est, après le séchage, incorporée dans le précurseur de matériau plastique, sans avoir été au préalable appliquée sur un matériau support inorganique ou une matière de charge inorganique, ou mélangée à un tel matériau ou à une telle charge.

12. Procédé selon l'une des revendications précédentes, **caractérisé en ce que** la matière solide est, après le séchage, mélangée d'abord à une matière de charge inorganique, et le mélange est incorporé dans le produit en matière plastique.

13. Procédé selon l'une des revendications précédentes, **caractérisé en ce qu'**on incorpore dans le précurseur de matériau plastique en outre au moins un autre matériau difficilement soluble dans l'eau, qui est choisi parmi le dioxyde de zirconium, le silicate de zirconium, le dioxyde de titane, l'oxyde de zinc, le fluorure de calcium, le carbonate de calcium, les aluminosilicates, l'hydroxylapatite, la fluorapatite, le sulfate de baryum, le sulfate de calcium et le carbone sous ses différentes formes.

14. Procédé selon la revendication 12, **caractérisé en ce que** la matière de charge est choisie parmi les matériaux difficilement solubles dans l'eau selon la revendication 13.

15. Procédé selon l'une des revendications précédentes, **caractérisé en ce que** le précurseur de matériau plastique est, après incorporation de la matière solide, moulé pour former un cathéter à usage médical.

16. Procédé selon l'une des revendications 1 à 14, **caractérisé en ce que** le précurseur de matériau plastique est appliqué en tant que revêtement sur un support en un autre matériau.

17. Procédé selon l'une des revendications précédentes, **caractérisé en ce que** la matière solide n'est pas appliquée sur un matériau support inorganique.

18. Procédé selon la revendication 17, **caractérisé en ce que** la matière solide n'est pas appliquée sur un oxyde de titane, de magnésium, d'aluminium, de silicium, de cérium, de zirconium, d'hafnium, de niobium ou de tantale ou sur de l'hydroxylapatite calcique ou sur du sulfate de baryum ou sur un mélange de ceux-ci.

19. Procédé selon la revendication 18, **caractérisé en ce que** la matière solide n'est pas appliquée sur du dioxyde de titane.

20. Produit en matière plastique pouvant être obtenu par le procédé selon l'une des revendications précédentes.

21. Produit en matière plastique selon la revendication 20, **caractérisé en ce qu'**il est constitué d'un matériau plastique à effet antimicrobien, qui peut être obtenu selon l'une des revendications 1 à 14.

22. Produit en matière plastique selon la revendication 20, **caractérisé en ce qu'**au moins une partie de ce produit est constituée d'un matériau plastique à effet antimicrobien, qui peut être obtenu par le procédé selon l'une des revendications 1 à 14 et dont au moins une autre partie est constituée d'un autre matériau.

23. Produit en matière plastique selon la revendication 22, **caractérisé en ce que** l'autre matériau est choisi parmi les métaux, le verre, la céramique et les matériaux plastiques.

24. Produit en matière plastique selon la revendication 22 ou 23, **caractérisé en ce que** sa surface est au moins partiellement constituée du matériau plastique à effet antimicrobien et au moins partiellement de l'autre matériau.

25. Produit en matière plastique selon les revendications 22 ou 23, **caractérisé en ce que** le matériau plastique à effet antimicrobien entoure l'autre matériau de telle sorte que la surface du produit soit exclusivement constituée du matériau plastique à effet antimicrobien.

26. Produit en matière plastique selon la revendication 20, qui est un cathéter.

27. Produit en matière plastique selon l'une des revendications 20 à 26, **caractérisé en ce qu'**il est exempt d'un matériau support inorganique pour la matière solide.

28. Produit en matière plastique selon la revendication 27, **caractérisé en ce qu'**il contient un oxyde de titane, de magnésium, d'aluminium, de silicium, de cérium, de zirconium, de hafnium, de niobium ou de tantale ou de l'hydroxylapatite calcique ou du sulfate de baryum, ne servant pas de matériau support pour la matière solide.

29. Produit en matière plastique selon la revendication 28, **caractérisé en ce qu'**il contient du dioxyde de titane ne servant pas de matériau support pour la matière solide.

30. Produit en matière plastique, **caractérisé en ce qu'**il contient un matériau plastique et un orthophosphate d'argent partiellement réduit qui y est réparti, qui est constitué de particules d'orthophosphate d'argent, qui ont été partiellement réduites en argent métallique de telle sorte que l'on ait dans les particules un contact direct entre l'orthophosphate d'argent et l'argent métallique, et que la surface des particules soit partiellement constituée de phosphate d'argent et partiellement d'argent métallique.

31. Précurseur de matériau plastique, **caractérisé en ce qu'**il contient un matériau plastique et un orthophosphate d'argent partiellement réduit, qui y est réparti, qui est constitué de particules d'orthophosphate d'argent, qui ont été partiellement réduites en argent métallique, de telle sorte que l'on ait dans les particules un contact direct entre l'orthophosphate d'argent et l'argent métallique, et que la surface des particules soit en partie constituée de phosphate d'argent et en partie d'argent métallique.

32. Produit en matière plastique selon la revendication 30 ou précurseur de matériau plastique selon la revendication 31, **caractérisé en ce que** l'orthophosphate d'argent partiellement réduit présente un rapport des ions argent de l'orthophosphate d'argent aux atomes d'argent de l'argent métallique compris entre 95 à 5 et 55 à 45.

33. Produit en matière plastique ou précurseur de matériau plastique selon l'une des revendications 30 à 32, **caractérisé en ce que** les particules présentent, selon une mesure par diffraction laser, une taille de particule telle que 95 % en poids, de préférence 98 % en poids et en particulier 99 % en poids des particules aient une taille de particule comprise dans la plage allant de 0,5 à 50 µm.

34. Produit en matière plastique ou précurseur de matériau plastique selon la revendication 33, **caractérisé en ce que** la distribution granulométrique présente un maximum, et que le maximum est compris dans la plage allant de 2 à 20 µm, de préférence dans la plage allant de 3 à 12 µm et en particulier dans la plage allant de 4 à 10 µm.

35. Produit en matière plastique ou précurseur de matériau plastique selon l'une des revendications 30 à 34, **caractérisé en ce que** le plastique comprend du polyuréthanne, du polycarbonate, de la silicone, du poly(chlorure de vinyle), du polyacrylate, du polyester, de la polyoléfine, du polystyrène ou du polyamide.

36. Produit en matière plastique selon l'une des revendications 30 et 32 à 35, **caractérisé en ce qu'**il est constitué d'un matériau plastique dans lequel l'orthophosphate d'argent partiellement réduit est réparti.

37. Produit en matière plastique selon l'une des revendications 30 et 32 à 35, **caractérisé en ce qu'**au moins une partie de ce produit est constituée d'un matériau plastique dans lequel l'orthophosphate d'argent partiellement réduit est réparti, et au moins une autre partie de ce produit est constituée d'un autre matériau.

38. Produit en matière plastique selon la revendication 37, **caractérisé en ce que** l'autre matériau est choisi parmi les métaux, le verre, la céramique et les matériaux plastiques.

39. Produit en matière plastique selon les revendications 37 ou 38, **caractérisé en ce que** sa surface est au moins en partie constituée d'un matériau plastique dans lequel l'orthophosphate d'argent partiellement réduit est réparti, et au moins en partie est constituée d'un autre matériau.

40. Produit en matière plastique selon les revendications 37 ou 38, **caractérisé en ce que** le matériau plastique dans lequel l'orthophosphate d'argent partiellement réduit est réparti entoure l'autre matériau de telle sorte que la surface du produit soit exclusivement constituée de ce matériau plastique.

41. Produit en matière plastique selon l'une des revendications 30 et 32 à 40, qui est un cathéter.
